# EUROPÄISCHE PATENTSCHRIFT

(11) **EP 1 536 610 B1**
(45) Veröffentlichungstag und Bekanntmachung des Hinweises auf die Patenterteilung: **23.04.2008**
(21) Anmeldenummer: 04104643.4
(22) Anmeldetag: 24.09.2004
(51) Int. Cl.: H04L 29/06, H04M 7/00

(54) **Verfahren zur Übermittlung von Kommunikationsdaten in einem Kommunikationssystem**
Method for data transmission in a communication system
Procédé pour la transmission de données dans un système de communication

(30) Priorität: 25.11.2003 DE 10354947
(43) Veröffentlichungstag der Anmeldung: 01.06.2005
(73) Patentinhaber: Siemens Enterprise Communications GmbH & Co. KG, 81379 München (DE)
(72) Erfinder: Stampfl, Robert, 85411, Hohenkammer (DE); Wille, Klaus, 81679, München (DE); Winkler, Steffi, 82131, Gauting (DE)
(74) Vertreter: Maier, Daniel Oliver

(56) Entgegenhaltungen:
- US-A1- 2002 141 386
- ROSENBERG DYNAMICSOFT H SALAMA CISCO SYSTEMS M SQUIRE HATTERAS NETWORKS J: "Telephony Routing over IP (TRIP); rfc3219.txt" IETF STANDARD, INTERNET ENGINEERING TASK FORCE, IETF, CH, Januar 2002 (2002-01), XP015008998 ISSN: 0000-0003

## Beschreibung

Die Erfindung betrifft ein Verfahren zur Übermittlung von Kommunikationsdaten in einem vorzugsweise heterogenen Kommunikationssystem.

Bei zeitgemäßen Kommunikationssystemen ist bekannt, Nutzdaten, z.B. zur Sprach- oder Videokommunikation, sowohl mittels einer sogenannten leitungsvermittelten Technik als auch über paketorientierte Netzwerke zu übermitteln, siehe z.B. US 2002/0141386 und US 2003/0008682. Kommunikationssysteme, welche sowohl eine paketorientierte als auch eine leitungsvermittelnde Übertragungstechnik ermöglichen, werden im folgenden als »konvergente« Kommunikationssysteme bezeichnet. Durch die Verwendung paketorientierter Datenübertragungsverfahren für diese Kommunikationssysteme ergeben sich häufig Einbußen in der Qualität der zu übertragenden Nutzdaten, welche in erster Linie durch eine wechselseitige Konvertierung zwischen einem kontinuierlichen Nutzdatenstrom und Nutzdatenpakete bedingt sind.

In Anlehnung an das häufig zum Einsatz kommende »Internet Protocol«, abkürzend auch mit IP bezeichnet, wird im folgenden auf Kommunikationsendgeräte, welche auf Basis einer paketorientierten Übertragungstechnik arbeiten, auch mit dem Begriff »IP-Kommunikationseinheit« Bezug genommen. Bei der paketorientierten Übertragung von Nutzdaten, beispielsweise Sprachdaten, ist auch der Begriff »Voice over IP«, abkürzend VoIP geläufig.

Ein konvergentes Kommunikationssystem umfasst üblicherweise mindestens eine Kommunikationseinrichtung, mit welcher durch entsprechende Anschlussbaugruppen eine Anbindung sowohl von IP-Kommunikationsendgeräten als auch von »klassischen«, d.h. nach dem leitungsvermittelnden Prinzip arbeitenden Kommunikationsendgeräten ermöglicht ist. Die Kommunikationseinrichtungen sind dabei üblicherweise untereinander sowie mit weiteren sogenannten abgesetzten Einheiten, welche seinerseits einen Beitrag zur Vermittlung und Verbindungssteuerung leisten, verbunden.

Zur Konvertierung zwischen leitungsorientierten und paketorientierten Übertragungstechniken können in einem konvergenten Kommunikationssystem weiterhin sogenannte Gateways eingesetzt werden. Ein Gateway nimmt dabei eine Konversion zwischen paketorientierten und leitungsorientierten Übertragungstechniken vor und ist häufig zwischen einem paketorientiertem Netzwerk und einer nach einem leitungsvermittelnden Verfahren arbeitenden Kommunikationseinrichtung angeordnet. Alternativ oder zusätzlich sind Teilnehmerbaugruppen und/oder Anschlussbaugruppen der Kommunikationseinrichtungen sowie sogenannte »abgesetzte Einheiten« mit Funktionen eines Gateways versehen.

Für abgesetzte Einheiten, Kommunikationseinrichtungen sowie für Einrichtungen, welche neben den vorgenannten Einheiten als eigenständige Einheit an einem Rufaufbau oder - vermittlung beteiligt sind, wird im Zuge einer allgemeineren Darstellung auch der Begriff »Knoteneinheit« verwendet.

Des weiteren umfasst der im folgenden verwendete Begriff »Kommunikationseinheit« allgemein an einer Kommunikation beteiligte Endgeräte, wie z.B. VoIP-Kommunikationsendgeräte, analoge sowie portable bzw. schnurlose Telephone, aber auch Datenterminals wie Rechnersysteme, mobile digitale Assistenten usw.

Ein konvergentes Kommunikationssystem ist häufig durch eine Strukturierung in einzelne Subnetzwerke gekennzeichnet, wobei üblicherweise jedes Subnetzwerk durch eine Kommunikationseinrichtung oder durch eine abgesetzte Einheit verwaltet wird, welche zur Übertragung von Nutz- bzw. Signalisierungsdaten je nach der notwendigen paketorientierten oder leitungsorientierten Anschlussbauweise der verbundenen Kommunikationsendgeräte nach einem unterschiedlichen Übertragungsverfahren arbeiten.

Für eine zwischen zwei Kommunikationsendgeräten aufgebaute Kommunikationsverbindung, welche sich über mehrere Subnetzwerke mit heterogenen Übertragungsverfahren erstreckt, ist in vielen Fällen eine mehrmalige Konvertierung in das vom jeweiligen Subnetzwerk unterstützte Übertragungsverfahren notwendig. Durch diese mehrmalige Konvertierung ergibt sich ein Qualitätsverlust der zu übertragenden Nutzdaten zwischen den beiden an der Verbindung beteiligten Kommunikationsendgeräten.

Aufgabe der Erfindung ist es, Mittel bereit zu stellen, durch deren Einsatz ein Qualitätsverlust bei einer Übertragung von Nutzdaten zwischen heterogenen Übertragungsverfahren verringert wird.

Eine Lösung der Aufgabe durch ein Verfahren mit den Merkmalen des Patentanspruchs 1.

Das erfindungsgemäße Verfahren nach Anspruch 1 zur Übermittlung von Kommunikationsdaten in einem Kommunikationssystem zwischen einer rufenden ersten Kommunikationseinheit und einer gerufenen zweiten Kommunikationseinheit sieht zunächst einen Aufbau einer primären Verbindung vor. Diese primäre Verbindung wird ausgehend von der ersten Kommunikationseinheit über mindestens eine Knoteneinheit zur zweiten Kommunikationseinheit aufgebaut, wobei in den für den Aufbau der primären Verbindung verwendeten Nachrichtenadressierungsdaten der am Aufbau der primären Verbindung beteiligten Kommunikationseinheiten und Knoteneinheiten Adressierungsdaten enthalten sind und mit Steuernachrichten zum Aufbau der primären Verbindung übermittelt werden. Die primäre Verbindung wird von der ersten Kommunikationseinheit über mindestens eine Knoteneinheit zur zweiten Kommunikationseinheit aufgebaut, wobei die Anzahl der für die primäre Verbindung enthaltenen Knoteneinheiten von der Netzwerkstruktur abhängig ist. Mithilfe der übermittelten Adressierungsdaten der am Aufbau der primären Verbindung beteiligten Kommunikationseinheit wird ein Einstiegsknoten registriert.

Der Einstiegsknoten ist definiert durch die entlang der primären Verbindung erste notwendige Konvertierung von leitungsorientierten zu paketorientierten Kommunikationsdaten. Der Ausstiegsknoten ist definiert durch die entlang der primären Verbindung letzte notwendige Konvertierung von paketorientierten zu leitungsorientierten Kommunikationsdaten.

Der Einstiegsknoten ist dabei die erste Einheit mit einem gültigen Adressierungsdatum, d.h. die ein gültiges Adressierungsdatum aufweisende erste Kommunikationseinheit selbst oder die erste Knoteneinheit mit einem gültigen Adressierungsdatum. Mit anderen Worten wird für den Fall, dass die erste Kommunikationseinheit ein gültiges Adressierungsdatum aufweist, diese als Einstiegsknoten registriert. Ein gültiges Adressierungsdatum ist dabei beispielsweise die Vorsehung einer Kommunikationseinheit bzw. Knoteneinheit mit einer Netzwerkadresse, unter der die Kommunikationseinheit bzw. Knoteneinheit von einem - beispielsweise paketorientierten - Netzwerk angesprochen werden kann. In analoger Weise wird eine entlang der primären Verbindung angeordnete letzte Knoteneinheit mit einem gültigen Adressierungsdatum bzw. die zweite Kommunikationseinheit selbst - sofern sie ein gültiges Adressierungsdatum aufweist - als Ausstiegsknoten registriert. Als letzter Verfahrensschritt ist die Ausbildung einer sekundären Verbindung zwischen den vormals registrierten Einstiegsknoten und Ausstiegsknoten über ein im Kommunikationssystem verfügbares Netzwerk vorgesehen. Die Kommunikationsdaten - insbesondere Nutzdaten - werden daraufhin über die sekundäre Verbindung übermittelt.

Ein wesentlicher Vorteil des erfindungsgemäßen Verfahrens ist darin zu sehen, dass eine Übermittlung von Kommunikationsdaten über die sekundäre Verbindung direkt, d.h. ohne Beteiligung mehrerer Knoteneinheiten und damit notwendiger Konvertierungen bewerkstelligt wird. Die sekundäre Verbindung erfolgt dabei beispielsweise über ein paketorientiertes Netzwerk, wodurch in einem heterogenen Kommunikationssystem mit sowohl auf einer leitungsvermittelnden als auch auf einer paketorientierten Übertragungstechnik aufweisende Knoteneinheiten eine mehrfache Konvertierung der Nutzdatenpakete bzw. des Nutzdatenstroms vermieden wird, in dem ein Kurzweg über die sekundäre Verbindung ohne eine Beteiligung mehrerer Knoteneinheiten gewählt wird.

Ein weiterer Vorteil des erfindungsgemäßen Verfahrens besteht in der Wahl des Einstiegs- bzw. Ausstiegsknoten. Im erfindungsgemäßen Verfahren ist dabei vorgesehen, dass der Einstiegsknoten möglichst nahe an der rufenden ersten Kommunikationseinheit und entsprechend der Ausstiegsknoten möglichst nahe an der gerufenen zweiten Kommunikationseinheit liegt. Bei einer Wahl einer paketorientierten Übertragungsweise für die sekundäre Verbindung sind mehrfache Konvertierungen längs der sekundären Verbindung damit vermeidbar. Die paketorientierte Übertragungsweise wird ohne weitere Konvertierung längs der sekundären Verbindung bis zum Ausstiegsknoten beibehalten. Bei einer Übermittlung von Kommunikationsdaten, beispielsweise in Form von Sprache, ist durch Anwendung des erfindungsgemäßen Verfahrens eine wesentliche Verbesserung der Sprachqualität sowohl an der rufenden ersten als auch an der gerufenen zweiten Kommunikationseinheit feststellbar.

Vorteilhafte Weiterbildungen der Erfindung sind den Unteransprüchen zu entnehmen.

In vorteilhafter Weise wird nach dem Aufbau der sekundären Verbindung diese zusätzlich zur primären Verbindung aufrechterhalten. Während über die sekundäre Verbindung zwischen dem Einstiegs- und dem Ausstiegsknoten Kommunikationsdaten austauschbar sind, wobei dieser Austausch in der zuvor beschriebenen Weise insbesondere bei einem Austausch von Nutzdaten einen Qualitätsanstieg bewirkt, bietet die parallel gehaltenen primäre Verbindung den Vorteil, dass bei einer Änderung des vermittlungstechnischen Zustands, z.B. bei einer eingeleiteten Rückfrage des rufenden Teilnehmers, auf eine vermittlungstechnische Steuerung der an der primären Verbindung beteiligten Knoteneinheiten, insbesondere Kommunikationseinrichtungen, zurückgegriffen werden kann, um ein entsprechendes Leistungsmerkmal wie die erwähnte Rückfrage auszuführen.

Die Leistungsmerkmalsteuerung erfolgt in vorteilhafter Weise durch eine der Kommunikationseinheit jeweils zugeordnete Kommunikationseinrichtung über Signalisierungsdaten der primären Verbindung.

Das erfindungsgemäße Verfahren wird für heterogenen Kommunikationssysteme, d.h. mit einer leitungsorientierten und einer paketorientierten Übertragungstechnik, angewandt. Bei einem heterogenen Kommunikationssystem erfolgt die primäre Verbindung auf einem Verbindungsteilstück zwischen zwei Knoteneinheiten bzw. zwischen einer Knoteneinheit und einer Kommunikationseinheit in Abhängigkeit von der Anschlussart der Knoteneinheiten bzw. Kommunikationseinheiten. Die Anschlussart der Knoteneinheit bzw. Kommunikationseinheit ist dabei entweder leitungsorientiert oder paketorientiert, so dass zwischen heterogenen Knoteneinheiten eine Konvertierung zwischen leitungsorientierten Kommunikationsdaten bzw. Kommunikationsdatenpaketen erforderlich ist. Unter Anwendung des erfindungsgemäßen Verfahrens ist die Qualitätssteigerung der übertragenen Kommunikationsdaten im Falle eines heterogenen Kommunikationssystems erheblich.

In vorteilhafter Weise wird anhand von Konfigurationsdaten einer am Aufbau der primären Verbindung beteiligten Knoteneinheit zunächst eine Überprüfung durchgeführt, ob der weitere Aufbau der sekundären Verbindung unter Einbeziehung dieser Knoteneinheit zulässig ist. Die Konfigurationsdaten sind beispielsweise an der jeweiligen Knoteneinheit vorgehalten. In Fällen, in denen eine Einbeziehung der aktuellen Knoteneinheit für einen weiteren Aufbau der sekundären Verbindung nicht vorgesehen ist, jedoch weitere Knoteneinheiten in der primären Verbindung enthalten sind, wird die sekundäre Verbindung in Form zweier Verbindungsteilstücke vorgesehen, wobei das erste Verbindungsteilstück an der Knoteneinheit als Ausstiegsknoten endet und das zweite Teilstück an einem nach der Knoteneinheit angeordneten Einstiegsknoten beginnt. In analoger Weise wird bei Bedarf eine Aufteilung der sekundären Verbindung in weitere Verbindungsteilstücke durchgeführt.

Ein Ausführungsbeispiel mit weiteren Vorteilen und Ausgestaltungen der Erfindung wird im Folgenden anhand der Zeichnung näher erläutert.

Dabei zeigen:
- Fig. 1:: Ein Strukturbild zur schematischen Darstellung eines Kommunikationssystems;
- Fig. 2A:: Ein Strukturbild zur schematischen Darstellung einer Übermittlung von Kommunikationsdaten in einem ersten Anwendungsfall;
- Fig. 2B:: Ein Strukturbild zur schematischen Darstellung einer Übermittlung von Kommunikationsdaten in einem zweiten Anwendungsfall;
- Fig. 2C:: Ein Strukturbild zur schematischen Darstellung einer Übermittlung von Kommunikationsdaten in einem dritten Anwendungsfall;
- Fig. 3:: Ein Strukturbild zur schematischen Darstellung einer effizienten Gestaltung einer sekundären Verbindung;
- Fig. 4:: Ein Strukturbild zur schematischen Darstellung einer Übermittlung von Kommunikationsdaten in einem in mehrere Subnetze gegliederten Kommunikationssystem in einer ersten Ausführungsform;
- Fig. 5:: Ein Strukturbild zur schematischen Darstellung einer Übermittlung von Kommunikationsdaten in einem in mehrere Subnetze gegliederten Kommunikationssystem in einer zweiten Ausführungsform;
- Fig. 6A:: Ein Ablaufschema zur Darstellung eines Austauschs von Steuernachrichten zur Ausbildung einer primären Verbindung;
- Fig. 6B:: Ein Ablaufschema zur Darstellung eines Austauschs von Steuernachrichten zur Ausbildung einer sekundären Verbindung;
- Fig. 7A:: Ein Ablaufschema zur Darstellung eines Austauschs von Steuernachrichten in einem in Subnetzwerke gegliedertem Kommunikationssystem zur Ausbildung einer primären Verbindung;
- Fig. 7B:: Ein Ablaufschema zur Darstellung eines Austauschs von Steuernachrichten in einem in Subnetzwerke gegliederten Kommunikationssystem zur Ausbildung einer sekundären Verbindung;

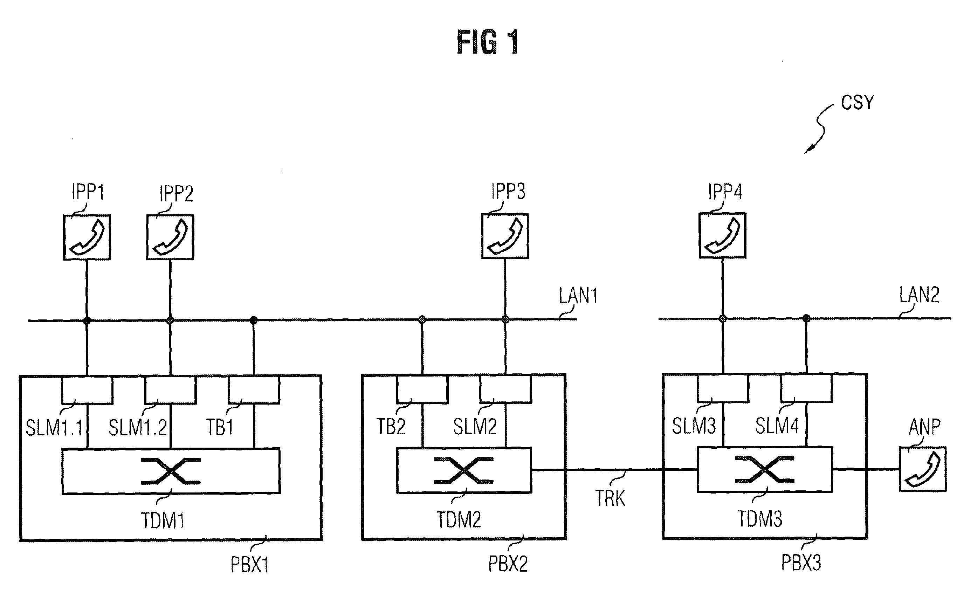

**Fig. 1** zeigt ein Kommunikationssystem CSY mit einem Ausschnitt erfindungswesentlicher Funktionskomponenten. Ein wesentlicher Bestandteil des Kommunikationssystems CSY sind Knoteneinheiten in Form einer ersten Kommunikationseinrichtung PBX1, einer zweiten Kommunikationseinrichtung PBX2 und einer dritten Kommunikationseinrichtung PBX3.

Die Kommunikationseinrichtungen PBX1,PBX2,PBX3 arbeiten intern nach einem zeitschlitzorientiertem Vermittlungsprinzip - in der Fachwelt oftmals als »Time Division Multiplex«, TDM bezeichnet - und verfügen demgemäß über ein entsprechendes jeweiliges Koppelfeld TDM1,TDM2,TDM3.

Die Kommunikationseinrichtungen PBX1,PBX, PBX3 sind jeweils mit einem leitungsvermittelnden Koppelnetz TDM1,TDM2,TDM3 ausgestaltet und jeweils und untereinander mit einem paketorientiertem Netzwerk verbunden.

Die erste und die zweite Kommunikationseinrichtung PBX1,PBX2 sind mit einem ersten paketorientiertem Netzwerksegment LAN1 verbunden. Das erste paketorientierte Netzwerksegment LAN1 ist alternativ als Intranet, Firmennetzwerk, als Domäne eines größeren Netzwerkverbundes oder auch Teil eines weltweiten Datennetzwerkes wie beispielsweise dem sogenannten World Wide Web, WWW, ausgestaltet.

Die dritte Kommunikationseinrichtung PBX3 ist an ein zweites paketorientiertes Netzwerksegment LAN2 angebunden. Bezüglich der Ausgestaltung des zweiten paketorientierten Netzwerksegmentes LAN2 gilt das für das erste paketorientierte Netzwerksegment LAN1 gesagte.

Die erste Kommunikationseinrichtung PBX1 ist über eine Verbindungsbaugruppe TB1 mit dem ersten paketorientierten Netzwerksegment LAN1 verbunden. In entsprechender Weise ist die zweite Kommunikationseinrichtung PBX2 über eine zweite Verbindungsbaugruppe TB2 mit dem ersten paketorientierten Netzwerksegment LAN1 verbunden.

Die Verbindungsbaugruppen TB1,TB2 der entsprechenden Kommunikationseinrichtungen PBX1,PBX2 dienen einem Austausch von paketorientiertem Kommunikationsdaten zwischen den beiden Kommunikationseinrichtungen PBX1,PBX2 über das paketorientierte Netzwerksegment LAN1 und zählen wie die Kommunikationseinrichtungen PBX1,PBX2,PBX3 zur Kategorie der Knoteneinheiten.

Die zweite Kommunikationseinrichtung PBX2 ist mit der dritten Kommunikationseinrichtung PBX3 über eine Bündelleitung TRK verbunden. Im Unterschied zu einer Verbindung über die Verbindungsbaugruppen TB1,TB2 über das erste paketorientierte Netzwerksegment LAN1 ist bei einer Übertragung über die Bündelleitung TRK zwischen der zweiten Kommunikationseinrichtung PBX2 und der dritten Kommunikationseinrichtung PBX3 eine leitungsorientierte Querverbindung zwischen beiden Kommunikationseinrichtungen PBX2,PBX3 vorgesehen.

Als weiterer Bestandteil des Kommunikationssystems CSY sind einige Kommunikationseinheiten IPP1,IPP2,IPP3,IPP4,ANP exemplarisch dargestellt. Ein erstes VoIP-Kommunikationsendgerät IPP1 ist über das erste paketorientierte Netzwerksegment LAN1 sowie über eine erste Teilnehmeranschlussbaugruppe SLM1.1 der ersten Kommunikationseinrichtung PBX1 mit der ersten Kommunikationseichrichtung PBX1 verbunden.

Ein zweites VoIP-Kommunikationsendgerät IPP2 ist über das erste paketorientierte Netzwerksegment LAN1 sowie über eine zweite Teilnehmeranschlussbaugruppe SLM1.2 der ersten Kommunikationseinrichtung PBX1 mit der ersten Kommunikationseinrichtung PBX1 verbunden.

In entsprechender Weise ist ein drittes VoIP-Kommunikationsendgerät IPP3 über das erste paketorientierte Netzwerksegment LAN1 mit einer zweiten Teilnehmeranschlussbaugruppe SLM2 mit der zweiten Kommunikationseinrichtung PBX2 verbunden.

Ein weiteres, viertes VoIP-Kommunikationsendgerät IPP4 ist über das zweite paketorientierte Netzwerksegment LAN2 mit einer dritten Teilnehmeranschlussbaugruppe SLM3 der dritten Kommunikationseinrichtung PBX3 verbunden.

Ein weiteres Kommunikationsendgerät ANP ist mit der dritten Kommunikationseinrichtung PBX3 leitungsorientiert verbunden. Es handelt sich bei diesem Kommunikationsendgerät ANP beispielsweise um ein analoges Telephon.

Die Teilnehmeranschlussbaugruppen SLM1.1,SLM1.2,SLM2,SLM3 führen eine bidirektionale Konversion zwischen einer in Richtung der VoIP-Kommunikationsendgeräte paketorientiert erfolgenden Übertragung und einer im Inneren der Kommunikationseinrichtungen PBX1,PBX2,PBX3 leitungsorientiert erfolgenden Übertragung durch.

Die Teilnehmeranschlussbaugruppen SLM1.1,SLM1.2 sind leitungsorientiert mit dem ersten Koppelfeld TDM1 im Inneren der ersten Kommunikationseinrichtung PBX1 verbunden. In entsprechender Weise sind die zweite Teilnehmeranschlussbaugruppe SLM2 mit dem zweiten Koppelfeld TDM2 als Bestandteil der zweiten Kommunikationseinrichtung PBX2 sowie die dritte Teilnehmeranschlussbaugruppe SLM3 mit dem dritten Koppelfeld TDM3 der dritten Kommunikationseinrichtung PBX3 intern verbunden.

Für das leitungsorientiert angeschlossenen Kommunikationsendgerät ANP ist eine wie vorher beschriebene Konversion zwischen paketorientierten und leitungsvermittelnden Kommunikationsdaten nicht vorgesehen. Obgleich in technischen Realisierungen ein Anschluss des Kommunikationsendgeräts ANP an die dritte Kommunikationseinrichtung PBX3 ebenfalls über eine - nicht dargestellte - Teilnehmeranschlussbaugruppe erfolgt, ist zu Gunsten einer verständlichen Darstellung eine direkte - d.h. ohne Vorsehung einer Konversion - leitungsorientierte Verbindung der Kommunikationseinrichtung ANP mit dem dritten Koppelfeld TDM3 zeichnerisch dargestellt.

Bezüglich der Struktur des Kommunikationssystems CSY ist anzumerken, dass eine Verbindung zwischen der ersten und der zweiten Kommunikationseinrichtung PBX1,PBX2 über die jeweilige Verbindungsbaugruppe TB1,TB2 und das erste paketorientierte Netzwerksegment LAN1 erfolgt. Da das zweite paketorientierte Netzwerksegment LAN2 keine logische Verbindung mit dem ersten paketorientierten Netzwerksegment LAN1 aufweist, ist ein Queraustausch von Kommunikationsdaten zwischen der zweiten Kommunikationseinrichtung PBX2 und der dritten Kommunikationseinrichtung PBX3 somit ausschließlich über die Bündelleitung TRK durchführbar.

Im folgenden wird unter weiterer Bezugnahme auf die Funktionseinheiten der Fig. 1 ein Austausch von Kommunikationsdaten zwischen einem rufenden und einem gerufenen Kommunikationsendgerät näher erläutert.

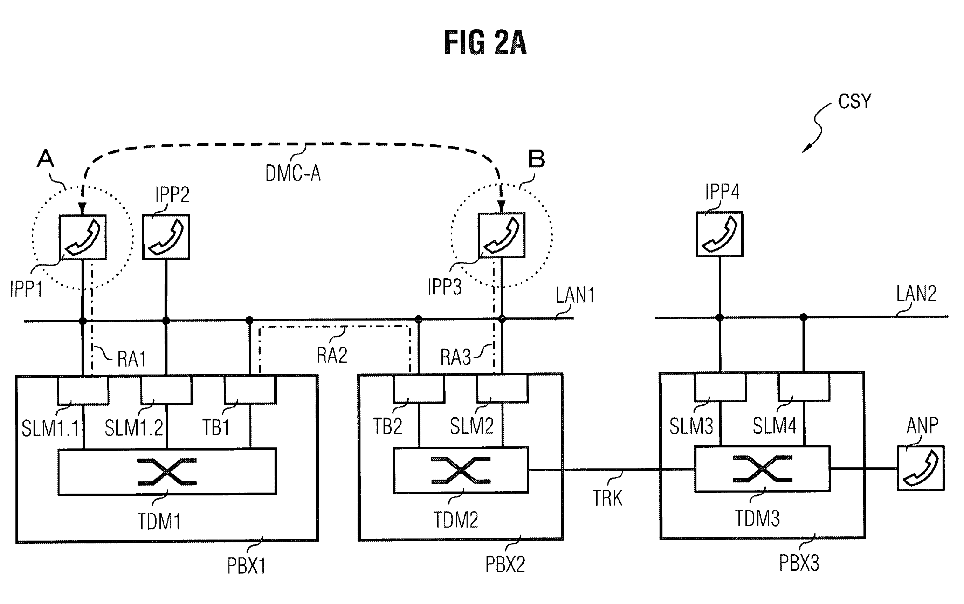

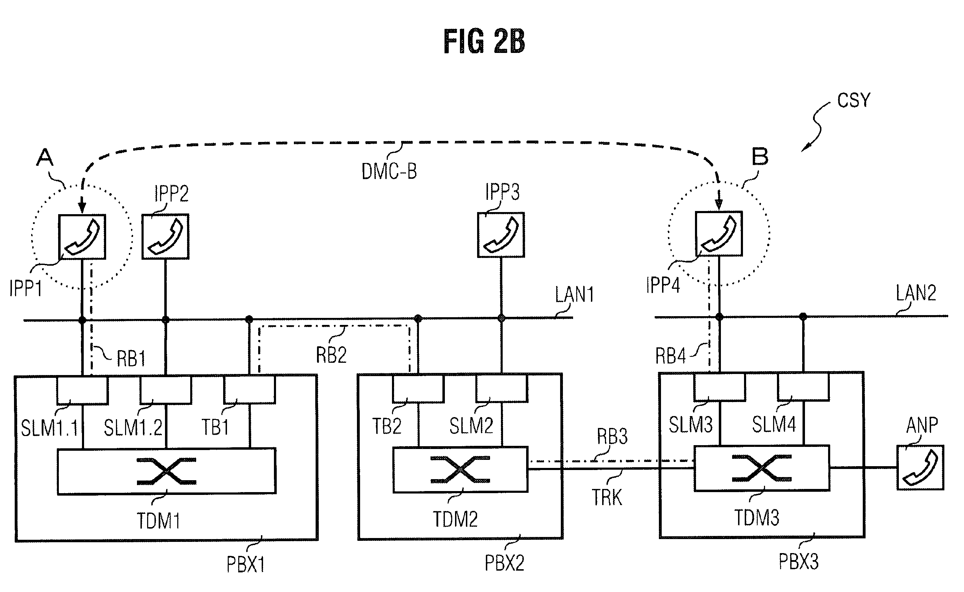

Fig. 2A zeigt ein Strukturbild zur schematischen Darstellung einer Übermittlung von Kommunikationsdaten in einem ersten Anwendungsfall. In diesem ersten Anwendungsfall wird eine primäre Kommunikationsverbindung zwischen einem rufenden Teilnehmer A am ersten Kommunikationsendgerät IPP1 zu einem gerufenen Teilnehmer B am dritten VoIP-Kommunikationsendgerät IPP3 aufgebaut.

Die primäre Kommunikationsverbindung wird ausgehend vom ersten VoIP-Kommunikationsendgerät IPP1 über einen ersten Verbindungsweg RA1 zur ersten Teilnehmeranschlussbaugruppe SLM1.1 der ersten Kommunikationseinrichtung PBX1 aufgebaut. In der ersten Teilnehmeranschlussbaugruppe SLM1.1 werden paketorientierte Kommunikationsdaten des ersten VoIP-Kommunikationsendgeräts IPP1 in leitungsorientierte Kommunikationsdaten konvertiert und einem ersten Koppelfeld TDM1 der ersten Kommunikationseinrichtung PBX1 zugeführt. In einer - nicht dargestellten - Vermittlungs- und Leistungsmerkmalsteuerungseinheit der ersten Kommunikationseinrichtung PBX1 wird aufgrund der Kommunikationsdaten ein zu vermittelnder Kommunikationsteilnehmer bestimmt und dementsprechend weitere Verbindungswege aufgebaut.

Im vorliegenden Fall wird das zu rufende dritte VoIP-Kommunikationsendgerät von einer anderen, der zweiten Kommunikationseinrichtung PBX2 verwaltet. Nach Verlassen des Koppelfelds TDM1 wird die Kommunikationsverbindung auf einem zweiten Verbindungsweg RA2, über die erste Verbindungsbaugruppe TB1 und über das erste paketorientierte Netzwerksegment LAN1, zur zweiten Kommunikationseinrichtung PBX2 geführt. Der zweite Verbindungsweg RA2 erfolgt über eine zweite Verbindungsbaugruppe TB2 der zweiten Kommunikationseinrichtung PBX2, wobei abermals eine bidirektionale Konversion zwischen paketorientierten und leitungsvermittelnden Kommunikationsdaten erfolgt. Nach dieser Konversion wird der Verbindungsweg weiter auf das zweite Koppelfeld TDM2 geführt, in welchem eine leitungsorientierte Vermittlung zu der zweiten Teilnehmerbaugruppe SLM2 erfolgt. In der zweiten Teilnehmerbaugruppe SLM2 werden die leitungsorientierten Kommunikationsdaten erneut in paketorientierte Kommunikationsdaten umgesetzt und über den dritten Verbindungsweg RA3 bzw. das erste paketorientierte Netzwerksegment LAN1 auf das dritte VoIP-Kommunikationsendgerät IPP3 und damit zum gerufenen Teilnehmer B durchgestellt. Die Wegführung bzw. Konversion der bislang in Richtung vom rufenden zum gerufen Teilnehmer A,B beschriebenen Kommunikationsdaten erfolgt in umgekehrter Richtung in analoger Weise.

Nach dem erfolgreichen Aufbau der primären Verbindung über die Verbindungswege RA1,RA2,RA3 erfolgt ein Nutzdatenaustausch zwischen dem rufenden Teilnehmer A und den gerufenen Teilnehmer B auf diesem Verbindungsweg. Auf dem primären Verbindungsweg werden Kommunikationsdaten - einschließlich der Nutzdaten - insgesamt sechsmal zwischen einem paketorientiertem und einem leitungsorientiertem Format konvertiert. Diese Konversionen erfolgen jeweils in den VoIP-Kommunikationsendgeräten IPP1,IPP3 selbst sowie jeweils in den Teilnehmeranschlussbaugruppen SLM1.1,SLM2 und in den Verbindungsbaugruppen TB1,TB2. Mit dieser Anzahl von Konversionen ist ein erheblicher Qualitätsverlust der Nutzdaten festzustellen.

Zur Vermeidung mehrfacher Konversionen zwischen einem paketorientiertem und einem leitungsvermittelndem Format sieht das erfindungsgemäße Verfahren eine direkte Medienkopplung zwischen dem rufenden Teilnehmer A und dem gerufenen Teilnehmer B vor. Die direkte Medienkopplung, oder auch »Direct Media Connection«, abkürzend DMC, erfolgt auf dem Wege einer sekundären Verbindung DMC-A, welche paketorientierte Kommunikationsdaten direkt zwischen dem ersten und dem dritten VoIP-Kommunikationsendgerät IPP1,IPP3 überträgt.

Bezüglich des Formats der auf der sekundären Verbindung in Form von Datenpaketen ausgetauschten Signalisierungsdaten sind beispielsweise der SIP-Standard, der H.323-Standard oder andere Protokolle zur Vorsehung einer Übertragung von Kommunikationsdaten in paketorientierten Netzwerken - »Voice over IP«, bzw. VoIP - heranziehbar.

SIP (Session Initiation Protocol) ist ein von der Internet Engineering Task Force (IETF) vorgeschlagener Standard für die Signalisierung von Verbindungen über paketorientierte Netzwerke und wird heute überwiegend im Bereich der Internet-Telephonie sowie für weitere Dienste wie Konferenzinteraktionen, Ereignisbenachrichtigung, Nachrichtenübermittlung usw. eingesetzt.

Der Standard H.323 ist ein internationaler ITU-T-Standard (International Telecommunication Union - Telecommunication Standardization Sector) für die Sprach-, Daten- und Videokommunikation über paketorientierte Netzwerke, der eine Interoperabilität der Herstellerprodukte untereinander gewährleistet.

Die Verwendung des Internet-Protokolls ist zwar bevorzugtes Mittel der Wahl mit einer hohen Verbreitung, die Erfindung beschränkt sich jedoch nicht auf die Anwendung dieses Protokolls.

Die sekundäre Verbindung DMC-A wird in einem allgemeinen Fall von einer möglichst nah auf seiten des rufenden Teilnehmers A liegenden Knoteneinheit bzw. Kommunikationseinheit zu einer möglichst nah auf Seiten des gerufenen Teilnehmers B liegenden Kommunikationseinheit bzw. Knoteneinheit geführt.

Im vorliegenden Falle verfügen die dem rufenden bzw. gerufenen Teilnehmer A,B zugeordneten Kommunikationsendgeräte IPP1,IPP3 über ein gültiges Adressierungsdatum, d.h., sie sind vom ersten paketorientierten Netzwerksegment LAN1 von einem beliebigen Kommunikationspartner in Kenntnis ihrer Netzwerkadresse ansprechbar.

Nach dem später noch im Detail zu beschreibenden Aufbau der sekundären Verbindung DMC-A senden und empfangen die Endpunkte - d.h. das erste und das dritte VoIP-Kommunikationsendgerät IPP1, IPP3 - dieser sekundären Verbindung DMC-A Nutzdaten ausschließlich über diese sekundäre Verbindung DMC-A, während über die primäre Verbindung unter Beteiligung der ersten und zweiten Kommunikationseinrichtung PBX1,PBX2 und der Verbindungswege RA1,RA2,RA3 keine Nutzdaten mehr übertragen werden.

Diese primäre Verbindung wird jedoch während des Bestehens der sekundären Verbindung DMC-A aufrechterhalten, um im Bedarfsfall, z.B. einer durch den rufenden Teilnehmer eingeleiteten Rückfrage, Vermittlungsleistungen bzw. Leistungsmerkmale der Kommunikationseinrichtungen PBX1,PBX2 in Anspruch nehmen zu können.

**Fig**. **2B** zeigt ein Strukturbild zur schematischen Darstellung einer Übermittlung von Kommunikationsdaten in einem zweiten Anwendungsfall. Dieser zweite Anwendungsfall unterscheidet sich vom vorausgenannten ersten Anwendungsfall im wesentlichen durch die Tatsache, dass der gerufene Teilnehmer B dieses Mal an den von der dritten Kommunikationseinrichtung PBX3 gesteuerten vierten VoIP-Kommunikationsendgerät IPP4 lokalisiert ist.

Wie bereits erläutert, ist die dritte Kommunikationseinrichtung PBX3 mit dem zweiten paketorientiertem Netzwerksegment LAN2 verbunden, es ist daher aufgrund dieser logischen Segmentierung und jeweiliger Verwaltung durch die Kommunikationseinrichtungen PBX1,PBX2,PBX3 keine paketorientierte Verbindung zwischen der dritten Kommunikationseinrichtung PBX3 und der ersten Kommunikationseinrichtung PBX1 über ein gemeinsames - nicht dargestelltes - Netzwerk vorgesehen.

Folglich wird die primäre Verbindung zwischen dem rufenden Teilnehmer A und dem gerufenen Teilnehmer B in einer zunächst mit dem ersten Anwendungsfall identischen Weise über einen ersten Verbindungsweg RB1 zur ersten Kommunikationseinrichtung PBX1, über einen zweiten Verbindungsweg RB2 zur zweiten Kommunikationseinrichtung PBX2 aufgebaut, ein dritter Verbindungsweg RB3 erfolgt aber im Gegensatz zum ersten Anwendungsfall über die Bündelleitung TRK und damit in einer leitungsorientierten Weise zum dritten Koppelfeld TDM3 der dritten Kommunikationseinrichtung PBX3. Die primäre Verbindung verläuft im weiteren über einen vierten Verbindungsweg RB4 von der dritten Teilnehmeranschlussbaugruppe SLM3 über das zweite paketorientierte Netzwerksegment LAN2 zum vierten VoIP-Kommunikationsendgerät IPP4.

Trotz einer organisatorischen bzw. logischen Einteilung in einzelne Netzwerksegmente LAN1,LAN2 sind diese Netzwerksegmente LAN1,LAN2 nicht physikalisch voneinander getrennt. Die Einteilung in einzelne Netzwerksegmente bzw. Domänen entspricht einer administrativen Zuteilung zu den einzelnen Kommunikationseinrichtungen PBX1,PBX2,PBX3 wobei im folgenden jederzeit davon ausgegangen wird, dass eine ohne Beteiligung der Kommunikationseinrichtungen PBX1,PBX2,PBX3 erfolgende Verbindung zwischen Kommunikationsendpunkten zwischen den verschiedenen Netzwerksegmenten LAN1,LAN2 über ein gemeinsames - nicht dargestelltes - Netzwerk aufzubauen ist.

Die zur voraus beschriebenen primären Verbindung entsprechende sekundäre Verbindung DMC-B erfolgt aufgrund der paketorientierten Anschlussweise der Beteiligten VoIP-Kommunikationsendgeräte IPP1, IPP4 direkt zwischen den genannten Kommunikationsendgeräten IPP1, IPP4.

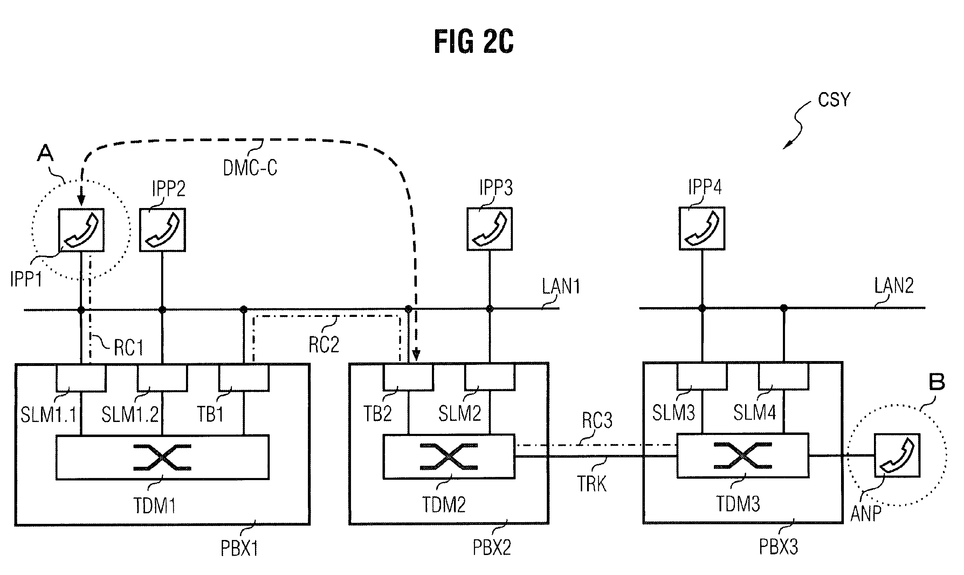

Fig. 2C zeigt ein Strukturbild zur schematischen Darstellung einer Übermittelung von Kommunikationsdaten in einem dritten Anwendungsfall. In diesem dritten Anwendungsfall ist der gerufene Teilnehmer B an einem Kommunikationsendgerät ANP lokalisiert, welches nicht über ein gültiges Adressierungsdatum verfügt, das Kommunikationsendgerät ANP des gerufenen Teilnehmers B ist also beispielsweise ein analoges Telefon.

In diesem Fall ist eine direkte Medienkopplung zwischen dem rufenden Teilnehmer A und dem gerufenen Teilnehmer B nicht möglich. Die sekundäre Verbindung DMC-C geht in diesem Fall abermals vom rufenden Teilnehmer A aus, endet aber an der zweiten Verbindungsbaugruppe TB2, d.h. der Knoteneinheit, welche längs der primären Verbindung die am nächsten zum gerufenen Teilnehmer B liegende Knoteneinheit mit einem gültigem Adressierungsdatum ist.

Die vor der sekundären Verbindung aufgebaute und parallel zu dieser gehaltene primäre Verbindung erfolgt ausgehend vom rufenden Teilnehmer A über sein zugeordnetes VoIP-Kommunikationsendgerät IPP1 über einen ersten Verbindungsweg RC1 an die erste Teilnehmeranschlussbaugruppe SLM1.1 der ersten Kommunikationseinrichtung PBX1, über deren erstes Koppelfeld TDM1 an die erste Verbindungsbaugruppe TB1 und weiterhin über einen zweiten Verbindungsweg RC2 von der ersten Verbindungsbaugruppe TB1 zur zweiten Verbindungsbaugruppe TB2 der zweiten Kommunikationseinrichtung PBX2, von wo aus sie über das zweite Koppelfeld TDM2 über die Bündelleitung TRK auf das dritte Koppelfeld TDM3 der dritten Kommunikationseinrichtung PBX3 und schließlich über eine Anschlussleitung das Kommunikationsendgerät ANP erreicht.

Die Kommunikationseinrichtungen PBX1,PBX2,PBX3 sowie deren Teilnehmeranschlussbaugruppen SLM1.1,SLM1.2,SLM2,SLM3 und deren Verbindungsbaugruppen TB1,TB2 sind gemäß des Sprachgebrauchs dieser Beschreibung als Knoteneinheiten mit einem gültigen Adressierungsdatum zu betrachten, d.h., jede leitungsorientiert-paketorientiert-konvertierende Knoteneinheit ist gekennzeichnet durch ein gültiges Adressierungsdatum.

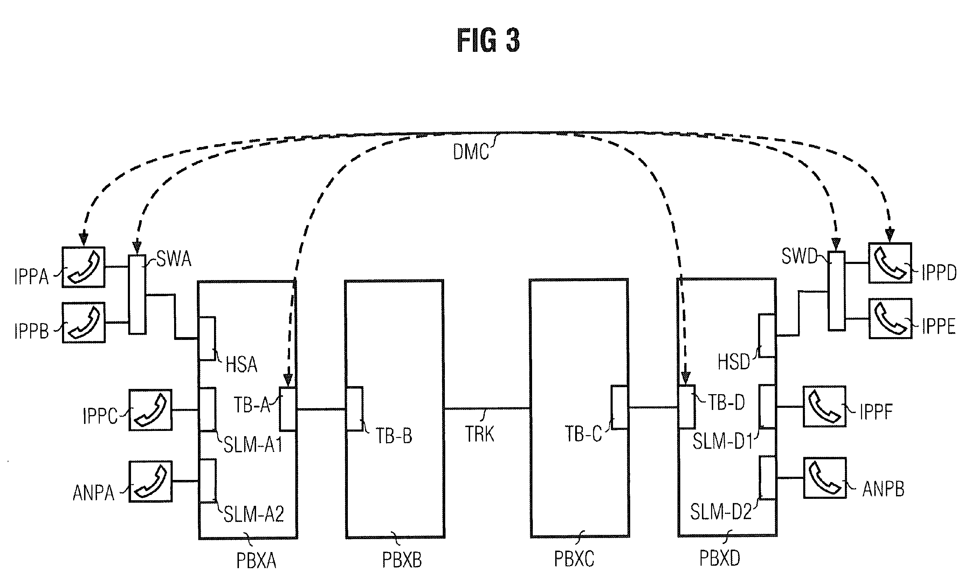

Fig. 3 zeigt ein Kommunikationssystem mit einer gegenüber den vorgehenden Figuren geänderten Struktur zur schematischen Darstellung einer effizienten Gestaltung einer sekundären Verbindung.

Das Kommunikationssystem umfasst mehrere Kommunikationseinheiten, im Einzelnen ein erstes VoIP-Kommunikationsendgerät IPPA, ein zweites VoIP-Kommunikationsendgerät IPPB, ein drittes VoIP-Kommunikationsendgerät IPPC, ein viertes VoIP-Kommunikationsendgerät IPPD, ein fünftes VoIP-Kommunikationsendgerät IPPE, ein sechstes VoIP-Kommunikationsendgerät IPPF sowie ein erstes Kommunikationsendgerät ANPA und ein zweites Kommunikationsendgerät ANPB. Die zuletzt genannten Kommunikationsendgeräte ANPA,ANPB verfügen über kein gültiges Adressierungsdatum und sind beispielsweise als analoge Telephone ausgestaltet.

Das Kommunikationssystem umfasst weiterhin vier teilweise untereinander verbundene Kommunikationseinrichtungen PBXA,PBXB,PBXC,PBXD. Die Kommunikationseinrichtungen PBXA,PBXB,PBXC,PBXD arbeiten nach einem zeitschlitzorientiertem Vermittlungsprinzip - in der Fachwelt oftmals als »Time Division Multiplex«, TDM bezeichnet - und verfügen demgemäß über ein entsprechendes Koppelfeld. Aus Übersichtsgründen ist das in den Kommunikationseinrichtungen PBXA,PBXB,PBXC,PBXD vorgesehene jeweilige Koppelfeld zeichnerisch nicht dargestellt.

Das erste und das zweite VoIP-Kommunikationsendgerät IPPA,IPPB sind über einen ersten Switch SWA mit der ersten Kommunikationseinrichtung verbunden. In gleicher Weise sind das vierte und das fünfte VoIP-Kommunikationsendgerät IPPD,IPPE über einen zweiten Switch SWD mit der vierten Kommunikationseinrichtung PBXD verbunden.

Die beiden Switch-Einheiten SWA,SWD verfügen jeweils über ein gültiges Adressierungsdatum und sind ebenfalls als Knoteneinheiten zu betrachten. Die Verbindung des ersten Switch SWA mit der zugehörigen ersten Kommunikationseinrichtung PBXA erfolgt beispielsweise über ein - nicht dargestelltes - paketorientiertes Netzwerk mit einem in der ersten Kommunikationseinrichtung PBXA integrierten Host Switch HSA. In gleicher Weise erfolgt die Verbindung des zweiten Switch SWD mit der vierten Kommunikationseinrichtung PBXD über einen zweiten Host Switch HSD.

Die übrigen mit der ersten Kommunikationseinrichtung PBXA verbundenen Kommunikationseinheiten, namentlich das dritte VoIP-Kommunikationsendgerät IPPC sowie das erste Kommunikationsendgerät ANPA, erfolgen jeweils über Teilnehmeranschlussbaugruppen SLM-A1,SLM-A2. In gleicher Weise ist das sechste VoIP-Kommunikationsendgerät IPPF und das zweite Kommunikationsendgerät ANPB über eine jeweilige Teilnehmeranschlussbaugruppe SLM-D1,SLM-D2 mit der vierten Kommunikationseinrichtung PBXD verbunden.

Eine z.B. paketorientierte Querverbindung zwischen der ersten und der zweiten Kommunikationseinrichtung PBXA,PBXB erfolgt über die erste Verbindungsbaugruppe TB-A bzw. über die zweite Verbindungsbaugruppe TB-B, wobei diese Verbindungsbaugruppen TB-A,TB-B in die jeweiligen Kommunikationseinrichtungen PBXA,PBXB integriert sind.

Eine Verbindung der zweiten Kommunikationseinrichtung PBXB mit der dritten Kommunikationseinrichtung PBXC erfolgt über eine leitungsorientierte Bündelleitung TRK.

Eine dritte Verbindungsbaugruppe TB-C der dritten Kommunikationseinrichtung PBXC verbindet diese mit einer vierten Verbindungsbaugruppe TB-D der vierten Kommunikationseinrichtung PBXD. Die beiden Switch-Einheiten SWA,SWD sowie deren verbundene Host Switch HSA,HSD sind wie die Verbindungsbaugruppen TB-A,TB-B,TB-C,TB-D als Knoteneinheiten im Sinne des vorher gesagten zu betrachten.

In Fig. 3 sind mehrere mögliche Ausbildungen einer sekundären Verbindung DMC zwischen dem ersten VoIP-Kommunikationsendgerät IPPA und dem vierten VoIP-Kommunikationsendgerät IPPD dargestellt. Je nachdem, welche Knoteneinheit örtlich am nächsten zum rufenden bzw. gerufenen VoIP-Kommunikationsendgerät IPPA,IPPD gelegen ist, ergeben sich mehrere Möglichkeiten für die Ausbildung der sekundären Verbindung DMC.

Die Ermittlung der Ein- und Ausstiegsknoten anhand der gültigen Adressierungsdaten erfolgt während des Verbindungsaufbaus der primären Verbindung.

Die sekundäre Verbindung verläuft vorteilhaft von einem Ausstiegsknoten - d.h. von der gerufenen Kommunikationseinheit oder von einer entlang der primären Verbindung angeordneten letzten Knoteneinheit mit einem gültigen Adressierungsdatum - zum Einstiegsknoten - d.h. zur rufenden Kommunikationseinheit oder zu einer entlang der primären Verbindung angeordneten ersten Knoteneinheit mit einem gültigen Adressierungsdatum. In beliebigen gemischten Kommunikationssystemen ergeben sich dabei die in Fig. 3 unterschiedlichen Möglichkeiten einer Spannweite der sekundären Verbindung DMC. Verfügen das gerufene und das rufende VoIP-Kommunikationsendgerät IPPD,IPPA jeweils - wie in dieser Beschreibung für VoIP-Kommunikationsendgeräte stets angenommen - über ein gültiges Adressierungsdatum, ist eine maximale Spannweite der sekundären Verbindung DMC direkt zwischen dem gerufenen und dem rufenden VoIP-Kommunikationsendgerät IPPD,IPPA gegeben. Die anderen in Fig. 3 dargestellten Ausprägungen der Fig. 3 betreffen Fälle, in denen die äußeren Kommunikationseinheiten und Knoteneinheiten über kein gültiges Adressierungsdatum verfügen, in denen die Spannweite der sekundären Verbindung DMC also entsprechend kleiner ist.

Für den Fall, dass das rufende VoIP-Kommunikationsendgerät IPPA hingegen nicht über ein gültiges Adressierungsdatum verfügt, beginnt die sekundäre Verbindung DMC am ersten Switch SWA, der somit Einstiegsknoten ist. Entsprechend endet die sekundäre Verbindung DMC am vierten Switch SWD - Ausstiegsknoten - für den Fall, dass das gerufene fünfte VoIP-Kommunikationsendgerät IPPE nicht über ein gültiges Adressierungsdatum verfügt. Wie bereits ausgeführt, wird in der weiteren Beschreibung jedoch stets angenommen, dass die VoIP-Kommunikationsendgeräte IPPA, IPPB,IPPC,IPPD,IPPE,IPPF jeweils über ein gültiges Adressierungsdatum verfügen.

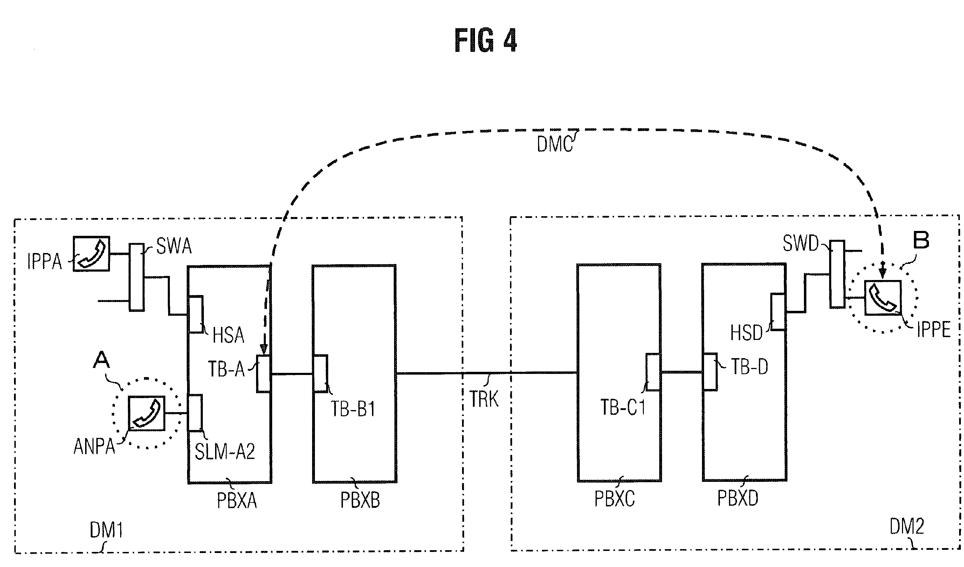

**Fig. 4** zeigt ein Strukturbild zur schematischen Darstellung einer Übermittlung von Kommunikationsdaten in einem in mehrere Subnetze gegliedertem Kommunikationssystem. Das Strukturbild der Fig. 4 verwendet die für die weitere Beschreibung notwendigen, aus Fig. 3 bekannten Funktionskomponenten.

In einem ersten Ausführungsfall ist angenommen, dass das Kommunikationssystem in eine erste Domäne DM1 sowie in eine zweite Domäne DM2 strukturiert ist. Die Domänen DM1,DM2 entsprechen dabei einer logischen Segmentierung des Kommunikationssystems, wie sie in der vorhergehenden Beschreibung in einer physikalischen Ausdrucksweise auch als Netzwerksegment bezeichnet wurden.

Im folgenden soll eine Verbindung zwischen einem rufenden Teilnehmer A auf dem ersten Kommunikationsendgerät ANPA und einem gerufenen Teilnehmer B auf dem fünften VoIP-Kommunikationsendgerät IPPE hergestellt werden. Nach Ausbildung der primären Verbindung erfolgt eine sekundäre Verbindung DMC zwischen der ersten Verbindungsbaugruppe TB-A der ersten Kommunikationseinrichtung PBXA und dem fünften VoIP-Kommunikationsendgerät IPPE.

Die erste Verbindungsbaugruppe TB-A entspricht dabei der zum rufenden Teilnehmer A nächstgelegenen Knoteneinheit mit einem gültigen Adressierungsdatum. Das Kommunikationsendgerät ANPA selbst ist, wie bereits erwähnt, ein analoges Telefon und verfügt demnach nicht über ein gültiges Adressierungsdatums bzw. nicht über die Möglichkeit einer Netzwerkverbindung.

Es wird im ersten Ausführungsfall gemäß Fig. 4 davon ausgegangen, dass die sekundäre Verbindung DMC domänenübergreifend ausgestaltet wird, d.h. von einer Knoteneinheit der ersten Domäne DM1 zu einer Kommunikationseinheit der zweiten Domäne DM2.

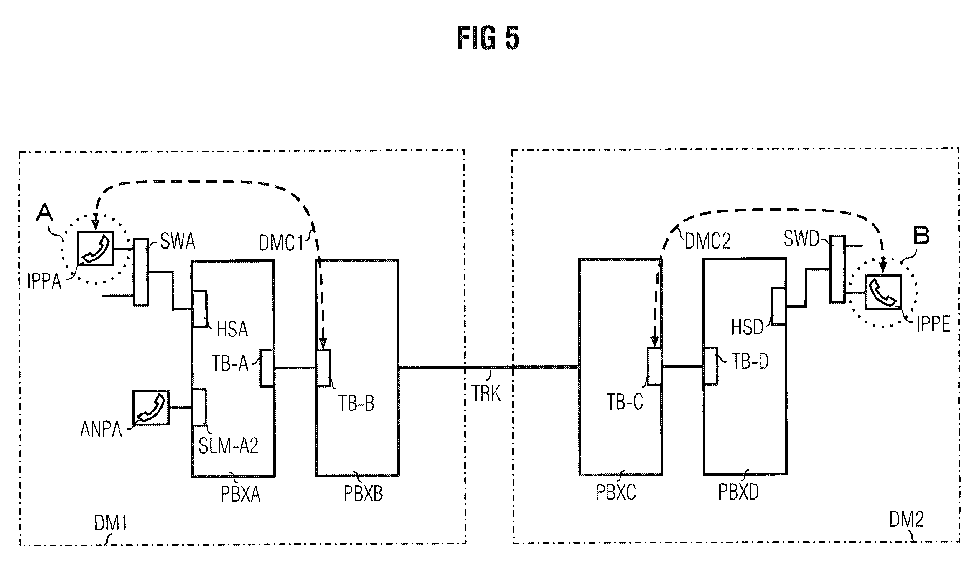

In **Fig. 5** ist das aus Fig. 4 bekannte Kommunikationssystem in einem zweiten Ausführungsfall dargestellt. Während der gerufene Teilnehmer B abermals am fünften VoIP-Kommunikationsendgerät IPPE lokalisiert ist, ist diesmal der rufende Teilnehmer am ersten VoIP-Kommunikationsendgerät IPPA lokalisiert.

Aufgrund der Tatsache, dass das erste VoIP-Kommunikationsendgerät IPPA ein gültiges Adressierungsdatum aufweist, ist dieses in die sekundäre Verbindung mit einbeziehbar. Es wird jedoch im zweiten Anwendungsfall gemäß Fig. 5 davon ausgegangen, dass die sekundäre Verbindung nicht direkt zwischen dem rufenden Teilnehmer A und dem gerufenen Teilnehmer B aufgebaut werden kann da aufgrund bestimmter Restriktionen im Kommunikationssystem keine direkten domänenübergreifenden Verbindungen zwischen der ersten Domäne DM1 und der zweiten Domäne DM2 erfolgen dürfen bzw. können.

Bei einer Ausbildung der primären Verbindung wird hierzu gemäß einer Ausgestaltung des erfindungsgemäßen Verfahrens an jeder Knoteneinheit überprüft, ob der Aufbau der sekundären Verbindung unter Einbeziehung dieser Knoteneinheit zulässig ist. Im vorliegenden Fall ist an der zweiten Kommunikationseinrichtung PBXB als Domänengrenze vermerkt, dass die sekundäre Verbindung nicht über Domänengrenzen hinweg erfolgen darf.

Im Verbindungsaufbau der primären Verbindung wird das Kennzeichen "Einstiegknoten" inklusive gültiger Adressierungsdaten wieder gelöscht, damit in nachfolgenden Domänen wieder ein Einstiegsknoten bestimmt werden kann.

Die sekundäre Verbindung gliedert sich in zwei Verbindungsteilstücke DMC1,DMC2, wobei das erste Verbindungsteilstück DMC1 zwischen dem ersten VoIP-Kommunikationsendgerät IPPA und der der zweiten Kommunikationseinheit PBXB vorausgehenden Knoteneinheit, d.h. der zweiten Verbindungsbaugruppe TB-B, ausgebildet wird. Diese Knoteneinheit TB-B wird folglich auch als Ausstiegsknoten bezeichnet.

Ein Zweck dieser genannten Restriktionen besteht beispielsweise in einer im weitesten Sinne als »LCR-Konfiguration« zu bezeichnenden Ausgestaltung zwischen der zweiten und der dritten Kommunikationseinrichtung PBXB,PBXC. Bei einem Least-Cost-Routing-Verfahren, LCR, ist eine auf netzspezifischen Regeln basierte Verbindungsführung nach kundenindividuellen Bedürfnissen wie z.B. Sprachqualität, teilnehmerabhängige Sicherheitseinrichtungen, Kostengründe, Bandbreite und/oder Verfügbarkeit vorgesehen.

Eine derartige Konfiguration geht also über den Wortsinn einer LCR-Konfigurationsweise hinaus, da die Verbindungsweggestaltung nicht ausschließlich dem Zweck einer möglichst kostengünstigen Verbindung dient. Es entspricht aber dem allgemeinen Sprachgebrauch, auch andere Gründe der Verbindungsweggestaltung mit dem Begriff »LCR-Konfiguration« zu belegen.

Die genannten Restriktionen sehen also eine Verbindung zwischen der zweiten und der dritten Kommunikationseinrichtung PBXB,PBXC auf der diese beiden Kommunikationseinrichtungen PBXB,PBXC verbindenden Bündelleitung TRK vor.

Das zweite Verbindungsteilstück DMC2 der sekundären Verbindung beginnt an der der dritten Kommunikationseinrichtung PBXC folgenden Knoteneinheit, mithin der dritten Verbindungsbaugruppe TB-C. Diese Knoteneinheit TB-C wird folglich auch als Einstiegsknoten bezeichnet. Von diesem Einstiegsknoten, der dritten Verbindungsbaugruppe TB-C, erfolgt das zweite Verbindungsteilstück DMC2 der sekundären Verbindung zum gerufenen Teilnehmer B an dessen fünften VoIP-Kommunikationsendgerät IPPA.

Nachdem bislang die topologische Ausgestaltung einer sekundären Verbindung behandelt wurde, wird im folgenden ein zeitlicher Ablauf eines Aufbaus der primären und der sekundären Verbindung anhand ausgetauschter Steuernachrichten besprochen.

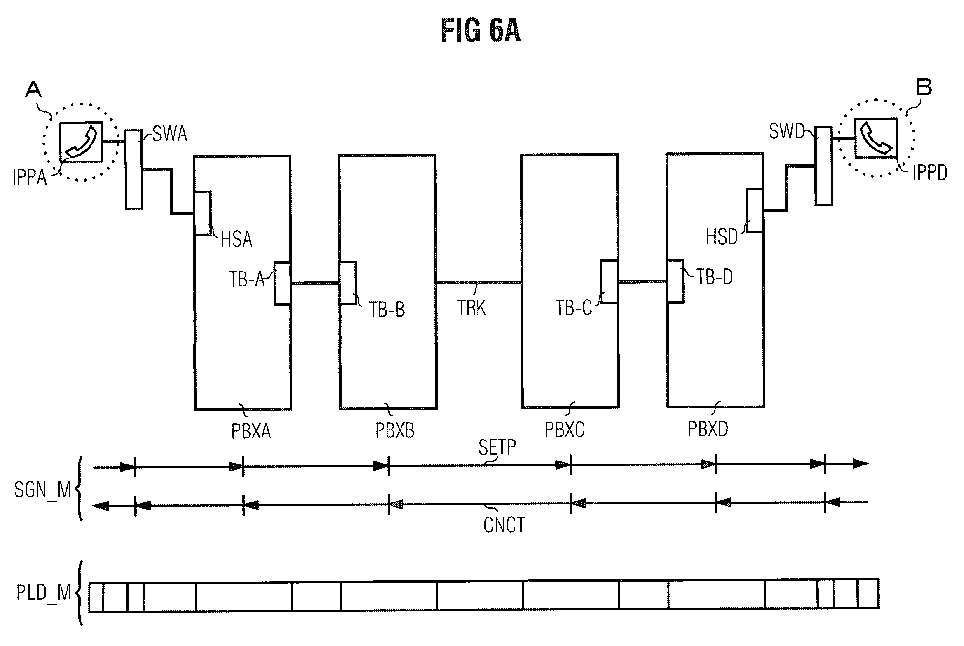

**Fig. 6A** zeigt ein Ablaufschema zur Darstellung eines Austauschs von Steuernachrichten zur Ausbildung einer primären Verbindung.

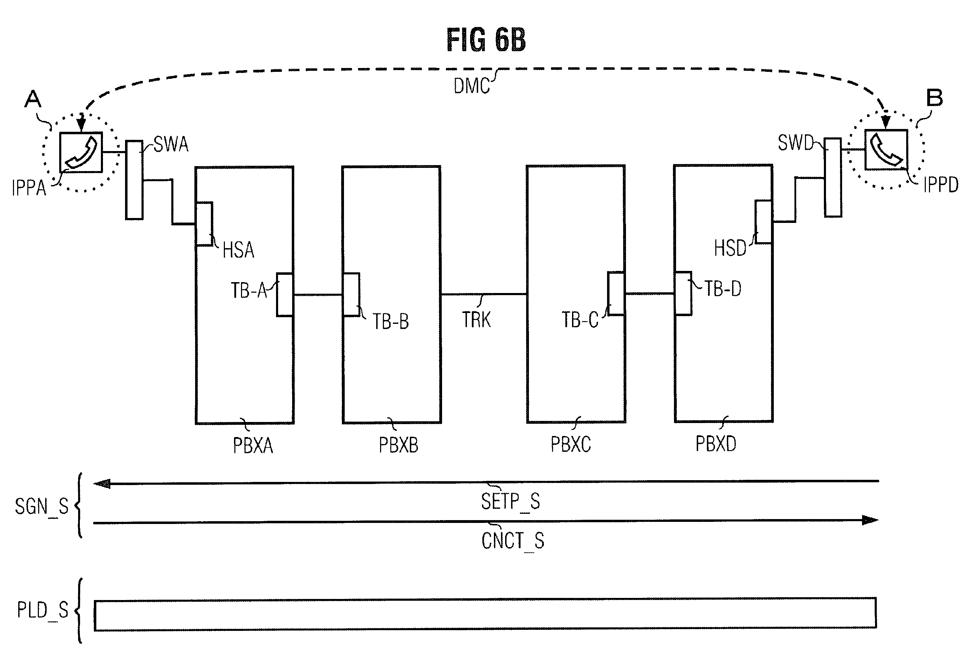

Bei der Beschreibung anhand der Fig. 6A sowie der folgenden Fig. 6B wird von einem Kommunikationssystem gemäß der voraus beschriebenen Fig. 4 ausgegangen, bei dem zur Ausbildung der sekundären Verbindung Domänengrenzen bzw. logischen Subnetzwerke keine Rolle spielen. Mit anderen Worten wird von einem Kommunikationssystem ausgegangen, bei dem keine Verbindungsweggestaltung der sekundären Verbindung - etwa in Form einer »LCR-Konfiguration« - zu beachten ist.

Im zu beschreibenden Verfahren soll eine Kommunikationsverbindung zwischen einem rufenden Teilnehmer A und einem gerufenen Teilnehmer B aufgebaut werden. Der rufende Teilnehmer A ist am ersten VoIP-Kommunikationsendgerät IPPA, der gerufene Teilnehmer am vierten Kommunikationsendgerät IPPD lokalisiert.

Die zum Aufbau der primären Verbindung zwischen dem rufenden Teilnehmer A und dem gerufenen Teilnehmer B ausgetauschten Steuernachrichten werden anhand von Signalisierungsdaten SGN_M dargestellt. Nach Aufbau der primären Verbindung ausgetauschte Nutzdaten PLD_M sind zeichnerisch mit einem mit vertikalen Linien unterteilten horizontalen Block dargestellt, wobei die vertikalen Linien in Höhe der Ein- und Ausgänge (Schnittstellen) von Knoteneinheiten eine jeweils dort erfolgende Konversion von paket- in leitungsorientierte bzw. von leitungs- in paketorientierte Nutzdaten PLD_M darstellen.

Die Signalisierungsdaten SGN M unterstützen eine Steuerung der Kommunikationsverbindung sowie eine Steuerung von Leistungsmerkmalen. Die Nutzdaten PLD M - oftmals auch als »Payload« bezeichnet - enthalten z.B. Sprach- und/oder Videokommunikationsdaten, welche mit Hilfe der Kommunikationsverbindung bidirektional transportiert werden.

In einem leitungsorientierten ISDN-Kommunikationssystem - »Integrated Services Digital Network« - werden Nutzdaten PLD_M über einen bzw. mehrere Basiskanäle oder auch B-Kanäle übertragen. Die Signalisierungsinformationen SGN_M werden in einem ISDN-Kommunikationssystem über einen sogenannten D-Kanal übertragen.

Während Nutz- und Signalisierungsdaten PLD_M, SGN_M in klassischen ISDN-basierten Kommunikationssystemen zeitkontinuierlich übertragen werden, ist in paketorientierten bzw. heterogenen Kommunikationssystemen eine Zerlegung in einzelne, mit Zieladressen versehen Datenpakete notwendig, um die Nutz- und Signalisierungsdaten PLD_M, SGN_M über das - nicht dargestelltes - paketorientierte Netzwerk zu übertragen. Beim Austritt aus dem paketorientiertem Netzwerk wird in den Kommunikationseinrichtungen PBXA,PBXB,PBXC,PBXD aus den Datenpaketen wieder ein kontinuierlicher Datenstrom zusammengesetzt.

Im folgenden wird der Aufbau der primären Kommunikationsverbindung erläutert.

Das Verfahren beginnt mit der Eingabe einer Wahlinformation bzw. Rufnummer am ersten VoIP-Kommunikationsendgerät IPPA durch den rufenden Teilnehmer A. Nach Eingabe der kompletten Wahlinformation wird vom rufenden VoIP-Kommunikationsendgerät IPPA eine Verbindungsanforderungsnachricht SETP gesendet, die im weiteren bis zum gerufenen VoIP-Kommunikationsendgerät IPPD weitergeleitet wird. Diese Weiterleitung bzw. "Durchreichung" der Verbindungsanforderungsnachricht SETP geht einher mit einer Modifikation und Anreicherung von in der Verbindungsanforderungsnachricht SETP enthaltenen Daten, welche zeichnerisch durch Pfeile in Verbindung mit horizontalen Linien in Höhe der jeweiligen die Daten der Verbindungsanforderungsnachricht SETP modifizierenden Knoteneinheit dargestellt ist.

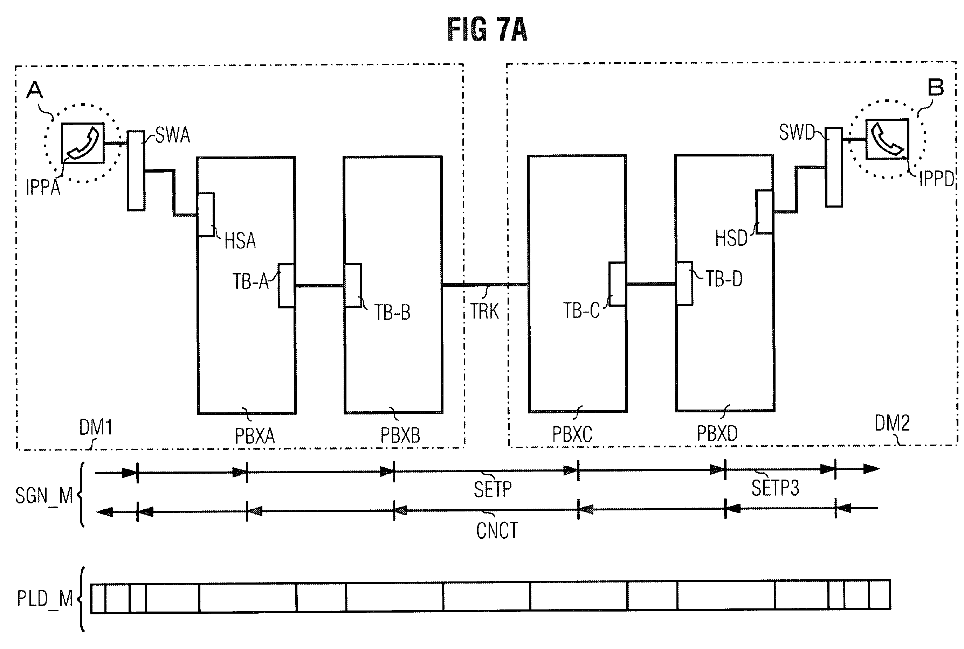

Die Verbindungsanforderungsnachricht SETP wird nach der Generierung durch das erste VoIP-Kommunikationsendgerät IPPA von der ersten Kommunikationseinrichtung PBXA empfangen und an die zweite Kommunikationseinrichtung PBXB weitergeleitet. Bei jeder Weitergabe der Verbindungsanforderungsnachricht SETP wird anhand von Konfigurationsdaten von am Aufbau der primären Verbindung beteiligten Knoteneinheiten, in diesem Fall der ersten Kommunikationseinheit PBXA bzw. der ersten Anschlussbaugruppe TB-A überprüft, ob die jeweils aktuelle Knoteneinheit ein gültiges Adressierungsdatum für einen möglichen sekundären Verbindungsaufbau aufweist. Zusätzlich - vgl. die später zu beschreibende Fig. 7A - erfolgt in jeder Knoteneinheit eine Überprüfung, ob die jeweils aktuelle Knoteneinheit eine Domänengrenze ist.

Für die genannten und die folgenden Knoteneinheiten wird davon ausgegangen, dass anhand der dort gespeicherten Konfigurationsdaten ein solcher Aufbau der sekundären Verbindung zulässig ist, z.B. deshalb, weil - im Gegensatz zum später beschriebenen Ausführungsbeispiel Fig. 7A - im vorliegenden Ausführungsbeispiel keine Domänengrenze vorliegt.

Die zweite Kommunikationseinrichtung PBXB leitet nach Erhalt der Verbindungsanforderungsnachricht SETP diese an die dritte Kommunikationseinrichtung PBXC auf dem Wege der Bündelleitung TRK weiter. Nach Erhalt der Verbindungsanforderungsnachricht SETP leitet die dritte Kommunikationseinrichtung PBXC diese - im Anschluss an die angesprochene Modifizierung der enthaltenen Daten - über die vierte Kommunikationseinrichtung PBXD an das gerufene VoIP-Kommunikationsendgerät IPPD weiter.

Nach dem Empfang der Verbindungsanforderungsnachricht SETP wird seitens des vierten VoIP-Kommunikationsendgeräts IPPD überprüft, ob ein Aufbau der primären Kommunikationsverbindung möglich ist. Im positiven Fall - z.B. wenn das vierte VoIP-Kommunikationsendgerät nicht durch eine anderweitige Kommunikationsverbindung belegt ist - wird vom vierten VoIP-Kommunikationsendgerät IPPD eine Verbindungsbestätigungsmeldung CNCT über den vierten Switch SWD an die vierte Kommunikationseinrichtung PBXD und von dieser an die dritte Kommunikationseinrichtung PBXC gesendet, von der aus diese Verbindungsbestätigungsmeldung CNCT über die dritte Kommunikationseinrichtung PBXC über die Bündelleitung TRK an die zweite Kommunikationseinrichtung PBXB - in einer für die Verbindungsanforderungsnachricht SETP analog beschriebenen Weise - durchgereicht wird. Über die zweite Kommunikationseinrichtung PBXB wird die Verbindungsbestätigungsnachricht CNCT über die erste Kommunikationseinrichtung PBXA und den ersten Switch SWA schließlich an das erste VoIP-Kommunikationsendgerät IPPA weitergereicht.

Nach dem Austausch der zuletzt genannten Verbindungsanforderungsnachricht SETP und der Verbindungsbestätigungsmeldung CNCT ist die primäre Verbindung zwischen dem ersten und dem vierten VoIP-Kommunikationsendgerät IPPA,IPPD damit aufgebaut. Auf Basis dieser primären Verbindung erfolgt nun ein Austausch von Nutzdaten PLD_M.

Wenn während des Verbindungsaufbaus der primären Verbindung zu einem gültigen "A-seitigen" (bezogen auf den rufenden Teilnehmer A) Adressierungsdatum ein "B-seitiges" (bezogen auf den gerufenen Teilnehmer B) Adressierungsdatum ermittelt ist, wird der sekundäre Verbindungsaufbau zwischen den mit diesen Adressierungsdaten zugehörigen Knoteneinheiten - im vorliegenden Fall: dem ersten und dem vierten VoIP-Kommunikationsendgerät IPPA,IPPD - veranlasst. Unter dem Ausdruck "A-seitig" wird die der rufenden Kommunikationseinheit A nächste Knoteneinheit, unter "B-seitig" entsprechend die der gerufenen Kommunikationseinheit B nächste Knoteneinheit verstanden.

In einer Ausgestaltung des Kommunikationssystems gemäß dem H.323-Protokoll erfolgt der sekundäre Verbindungsaufbau nach dem H.323- bzw. H.225-Protokoll. Diese Direktkopplungsanforderungsnachricht DMC REQ entspricht dabei einer sog. »Fast Connect«-Nachricht, wie sie im Standard H.225 für eine schnelle Datenverbindung vorgesehen ist.

Die Verwendung einer »Fast Connect«-Nachricht bedeutet insbesondere, dass eine Verbindung zwischen dem vierten und dem ersten VoIP-Kommunikationsendgerät IPPD,IPPA auf den Weg einer sekundären Verbindung, nicht über - wie bei der primären Verbindung notwendige - Einzelschritte hergestellt wird.

Die Einrichtung der zugehörigen sekundären Verbindung wird anhand der folgenden Figur beschrieben.

**Fig**. **6B** zeigt einen Austausch von Steuernachrichten zur Ausbildung der in Folge zur primären Verbindung gemäß der Beschreibung anhand von Fig. 6A aufzubauenden sekundären Verbindung. Nach dem vollständig erfolgten Aufbau der aus Fig. 6A erläuterten primären Verbindung wird eine sekundäre Verbindung DMC direkt zwischen den beiden Kommunikationsendpunkten, d.h. dem vierten und dem ersten VoIP-Kommunikationsendgerät IPPD,IPPA aufgebaut.

Mit Kenntnis der jeweiligen IP-Adressen, welche mit dem in Zusammenhang mit der primären Verbindung ausgetauschten Steuernachrichten SETP,CNCT übermittelt wurden, ist ein direkter, vorteilhaft H.323-basierter Verbindungsaufbau für die sekundäre Verbindung durchführbar.

Das vierte VoIP-Kommunikationsendgerät IPPD sendet eine Verbindungsanforderungsnachricht SETP S direkt an das erste VoIP-Kommunikationsendgerät IPPA. Diese Verbindungsanforderungsnachricht SETP S wird über das - nicht dargestellte - paketorientierte Netzwerk übertragen und am ersten VoIP-Kommunikationsendgerät IPPA empfangen.

Das erste VoIP-Kommunikationsendgerät IPPA sendet daraufhin eine an die Netzwerkadresse des vierten VoIP-Kommunikationsendgerät IPPD gerichtete Verbindungsbestätigungsmeldung CNCT S, nach deren Erhalt die sekundäre Verbindung aufgebaut ist. Die Verbindungsanforderungsnachricht SETP S bzw. die Verbindungsbestätigungsmeldung CNCT S sind bei einer vorteilhaften Verwendung des H.323-Protokolls nach dem H.225-Standard ausgestaltete Steuernachrichten.

Nach dem erfolgten Aufbau der sekundären Verbindung DMC werden Nutzdaten PLD S zwischen dem gerufenen Teilnehmer B und dem rufenden Teilnehmer A in paketorientierter Weise direkt ausgetauscht.

**Fig. 7A** zeigt ein Ablaufschema zur Darstellung eines Austauschs von Steuernachrichten zur Ausbildung einer primären Verbindung in einem Kommunikationssystem mit einer vorgebbaren Verbindungsweggestaltung.

Bei der Beschreibung anhand der Fig. 7A wird von einem Kommunikationssystem gemäß der voraus beschriebenen Fig. 5 ausgegangen, bei dem zur Ausbildung der sekundären Verbindung eine Berücksichtigung von Domänengrenzen bzw. logischen Subnetzwerke stattfindet. Mit anderen Worten wird von einem Kommunikationssystem ausgegangen, bei dem eine Verbindungsweggestaltung etwa in Form einer »LCR-Konfiguration« zu beachten ist.

Das Kommunikationssystem ist - analog zur Situation gemäß der Beschreibung anhand der Fig. 5 und im Unterschied zur Beschreibung anhand der Fig. 6A - in eine erste und eine zweite Domäne DM1,DM2 gegliedert.

Die Ausbildung der primären Verbindung zwischen dem ersten und dem vierten VoIP-Kommunikationsendgerät IPPA,IPPD läuft weitgehend identisch zu der anhand der Fig. 6A beschriebenen Ausbildung ab, so dass für eine detaillierte Darstellung im wesentlichen auf die dortige Beschreibung verwiesen werden kann und im folgenden nur die wesentlichen Unterschiede des Verbindungsaufbaus aufgrund einer zwischen der ersten und zweiten Domäne DM1,DM2 bestehende Domänengrenze dargestellt werden.

Die Verbindungsanforderungsnachricht SETP wird im vorliegenden Ausführungsbeispiel zwischen den Domänen DM1,DM2 leitungsorientiert von der zweiten Kommunikationseinrichtung PBXB über die Bündelleitung TRK zur dritten Kommunikationseinrichtung PBXC übertragen. Im übrigen muss eine leitungsorientierten Bündelleitung TRK zwischen zwei Knoteneinheiten jedoch nicht zwangsläufig als Domänengrenze definiert sein. Umgekehrt kann alternativ oder zusätzlich eine Domänengrenze auch - z.B. aufgrund besonderer Sicherheitsanforderungen wie z.B. erhöhter Abhörsicherheit - innerhalb eines paketorientierten Netzwerks definiert sein, etwa um eine sekundäre Verbindung über ein öffentlich zugängliches paketorientiertes Netzwerk zu unterbinden.

Aufgrund der Verbindungsweggestaltung einer Knoteneinheit, nämlich der zweiten Kommunikationseinrichtung PBXB, ist in den Konfigurationsdaten dieser zweiten Kommunikationseinrichtung PBXB vermerkt, dass die sekundäre Verbindung nicht über die nach der zweiten Kommunikationseinrichtung PBXB verlaufenden Domänengrenze erfolgen darf. Diese vorgenannte Restriktion wird in ein entsprechendes Datenfeld in die Verbindungsanforderungsnachricht SETP eingetragen und an die nächste Knoteneinheit - im vorliegenden Ausführungsbeispiel ist dies die dritte Kommunikationseinrichtung PBXC - mit einem gültigen Adressierungsdatum übermittelt, um diese anzuweisen, einen in ihrer Domäne DM2 gültigen, erneuten Einstiegsknoten zu bestimmen.

Die Einrichtung der zugehörigen sekundären Verbindung wird anhand der folgenden Figur beschrieben.

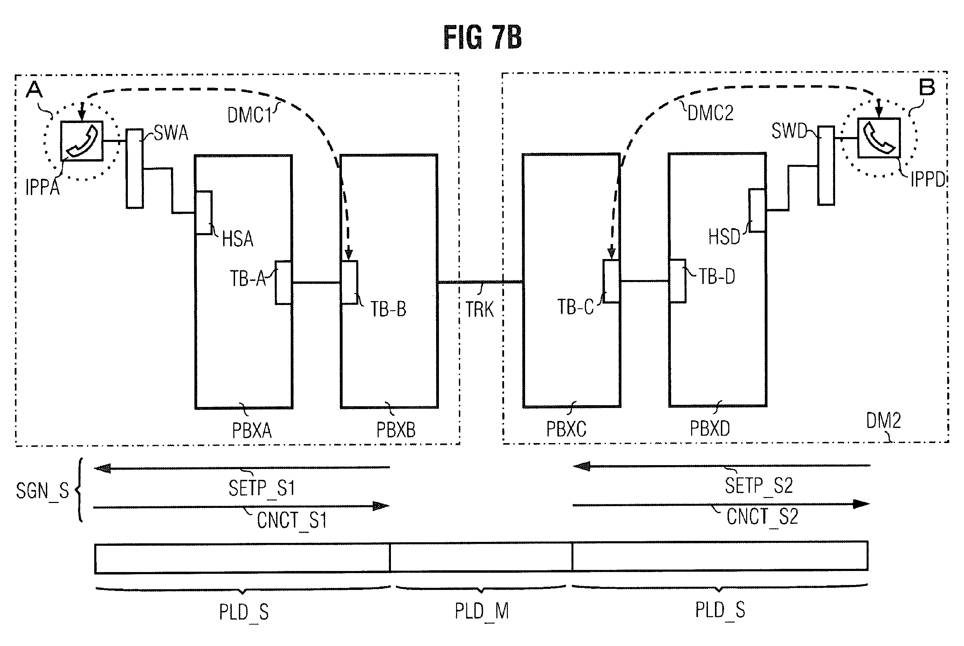

**Fig. 7B** zeigt einen Austausch von Steuernachrichten zur Ausbildung der in Folge zur primären Verbindung gemäß der Beschreibung anhand von Fig. 7A aufzubauenden sekundären Verbindung.

Nach dem Aufbau der primären Verbindung wird eine sekundäre Verbindung zwischen den beiden Kommunikationsendpunkten, d.h. dem vierten und dem ersten VoIP-Kommunikationsendgerät IPPD,IPPA aufgebaut. Die sekundäre Verbindung wird diesmal jedoch unter Beteiligung zweier paketorientierter Verbindungsteilstücke DMC1,DMC2 und mit einem weiteren leitungsorientierten Teilstück über die Bündelleitung TRK aufgebaut. Die paketorientierten Verbindungsteilstücke DMC1,DMC2 werden dabei autonom und unabhängig voneinander, gesteuert durch die jeweiligen Ein- und Ausstiegsknoten in der jeweiligen Domäne DM1,DM2 ausgebildet.

Ein erster Einstiegsknoten der sekundären Verbindung in dieser Ausführungsform ist das erste VoIP-Kommunikationsendgerät IPPA, dessen Adressierungsdatum - insbesondere IP-Adresse - in Richtung der aus Fig. 6A gezeigten Verbindungsanforderungsnachricht SETP übermittelt wird. Diese Übermittlung des Adressierungsdatums des ersten Einstiegsknotens erfolgt bis zu einem Transitknoten, an dem eine Restriktion bezüglich einer Verbindungsweggestaltung - Domänengrenze - in dessen Konfigurationsdaten vermerkt ist. Dieser Transitknoten entspricht der zweiten Verbindungsbaugruppe TB-B der zweiten Kommunikationseinrichtung PBXB als Grenze der ersten Domäne DM1. Der Transitknoten wird als erster Ausstiegsknoten eines ersten Verbindungsteilstückes DMC1 der sekundären Verbindung markiert und das Adressierungsdatum in der - in Fig. 6A gezeigten - Verbindungsanforderungsnachricht SETP durch den Ausstiegsknoten, der zweiten Verbindungsbaugruppe TB-B, als für die folgende zweite Domäne DM2 nicht geltend gekennzeichnet.

Ein Einstiegsknoten der sekundären Verbindung in der zweiten Domäne DM2 ist die dritte Verbindungsbaugruppe TB-C der dritten Kommunikationseinrichtung PBXC, deren Adressierungsdatum - insbesondere IP-Adresse - in Richtung der aus Fig. 6A gezeigten Verbindungsanforderungsnachricht SETP übermittelt wird. Diese Übermittlung des Adressierungsdatums des zweiten Einstiegsknotens erfolgt bis zum "B-seitigen" Ziel, d.h. dem vierten VoIP-Kommunikationsendgerät IPPD.

Zu einem Zeitpunkt, an dem das vierte VoIP-Kommunikationsendgerät IPPD zum Aufbau der primären Verbindung - vgl. Fig. 7A - die Bestätigungsmeldung CNCT gesendet hat, wird von diesem in der zweiten Domäne DM2 zwischen dem dortigen Ausstiegsknoten - dem vierten VoIP-Kommunikationsendgerät IPPD - und dem dortigen Einstiegsknoten - der dritten Verbindungsbaugruppe TB-C - nach einem Austausch einer zweiten sekundären Verbindungsanforderungsnachricht SETP_S2 und einer zweiten sekundären Verbindungsbestätigungsnachricht CNCT_S2 eine paketorientierte DMC2 bzw. "Verbindungsteilstück" der sekundären Verbindung aufgebaut.

Zu einem darauf folgenden Zeitpunkt, an dem die zweite Kommunikationseinrichtung PBXB zum Aufbau der primären Verbindung - vgl. Fig. 7A - die Bestätigungsmeldung CNCT weitergereicht hat, wird von der zugeordneten zweiten Verbindungsbaugruppe TB-B in der ersten Domäne DM1 zwischen dem dortigen Ausstiegsknoten - der zweiten Verbindungsbaugruppe TB-B - und dem dortigen Einstiegsknoten - dem ersten VoIP-Kommunikationsendgerät IPPA - nach einem Austausch einer ersten sekundären Verbindungsanforderungsnachricht SETP_S1 und einer ersten sekundären Verbindungsbestätigungsnachricht CNCT_S1 eine paketorientierte Verbindung DMC1 bzw. "Verbindungsteilstück" der sekundären Verbindung aufgebaut.

Zwischen dem ersten und vierten VoIP-Kommunikationsendgeräten IPPA,IPPD ausgetauschte Nutzdaten werden als paketorientierte Nutzdaten PLD S auf den paketorientierten Verbindungen DCM1,DCM2 und als leitungsorientierter Datenstrom PLD_M auf der Bündelleitung TRK ausgetauscht.

In der Beschreibung wurde davon ausgegangen, dass die sekundäre Verbindung stets vom Ausstiegsknoten - d.h. von der gerufenen Kommunikationseinheit oder von einer entlang der primären Verbindung angeordneten letzten Knoteneinheit mit einem gültigen Adressierungsdatum - zum Einstiegsknoten - d.h. von der rufenden Kommunikationseinheit oder von einer entlang der primären Verbindung angeordneten ersten Knoteneinheit mit einem gültigen Adressierungsdatum - erfolgt. In einer alternativen Ausführungsform der Erfindung erfolgt die Einrichtung der sekundären Verbindung in analoger Weise vom Einstiegsknoten zum Ausstiegsknoten.

## Patentansprüche

1. Verfahren zur Übermittlung von Kommunikationsdaten in einem Kommunikationssystem (CSY) zwischen einer rufenden ersten Kommunikationseinheit (IPPA) und einer gerufenen zweiten Kommunikationseinheit (IPPD), wobei die Kommunikationsdaten Signalisierungs- und/oder Nutzdaten umfassen, umfassend folgende Schritte:
- Aufbau einer primären Verbindung ausgehend von der ersten Kommunikationseinheit (IPPA) über mindestens eine Knoteneinheit zur zweiten Kommunikationseinheit (IPPD) mit Übermittlung von Adressierungsdaten der am Aufbau der primären Verbindung beteiligten Kommunikationseinheiten (IPPA,IPPD) und Knoteneinheiten, wobei die primäre Verbindung auf einem Verbindungsteilstück zwischen zwei Knoteneinheiten bzw. Kommunikationseinheiten abhängig von der Anschlussart der Knoteneinheiten bzw. Kommunikationseinheiten leitungsorientiert oder paketorientiert erfolgt, wobei die primäre Verbindung aus mindestens einem leitungsorientierten Teilstück und aus mindestens einem paketorientiertem Teilstück besteht,
- Registrierung der ersten Kommunikationseinheit (IPPA) oder einer entlang der primären Verbindung angeordneten ersten Knoteneinheit, welche ein gültiges Adressierungsdatum aufweisen, als Einstiegsknoten;
- Registrierung der zweiten Kommunikationseinheit (IPPD) oder einer entlang der primären Verbindung angeordneten letzten Knoteneinheit, welche ein gültiges Adressierungsdatum aufweisen, als Ausstiegsknoten;
- Ausbildung einer paketorientierten sekundären Verbindung (DMC) zwischen dem Ausstiegs- und dem Einstiegsknoten über ein im Kommunikationssystem verfügbares paketorientiertes Netzwerk, wobei die Kommunikationsdaten über die sekundäre Verbindung (DMC) übermittelt werden.

2. Verfahren nach Anspruch 1,
**dadurch gekennzeichnet**
**dass** der Aufbau der sekundären Verbindung (DMC) ausgehend vom Ausstiegsknoten in Gegenrichtung zur primären Verbindung erfolgt.

3. Verfahren nach Anspruch 1,
**dadurch gekennzeichnet,**
**dass** der Aufbau der sekundären Verbindung (DMC) ausgehend vom Einstiegsknoten in Richtung der primären Verbindung erfolgt.

4. Verfahren nach einem der vorhergehenden Ansprüche,
**dadurch gekennzeichnet,**
**dass** nach dem Aufbau der sekundären Verbindung (DMC) diese zusätzlich zur primären Verbindung aufrechterhalten wird und Nutzdaten (PLD_S) zwischen dem Einstiegs- und dem Ausstiegsknoten ausschließlich über die sekundäre Verbindung ausgetauscht werden.

5. Verfahren nach Anspruch 1*,*
**dadurch gekennzeichnet,**
**dass** die sekundäre Verbindung auf Basis der H.323-Spezifikation erfolgt.

6. Verfahren nach Anspruch 1,
**dadurch gekennzeichnet,**
**dass** die sekundäre Verbindung (DMC) auf Basis der SIP-Spezifikation erfolgt.

7. Verfahren nach einem der vorhergehenden Ansprüche,
**dadurch gekennzeichnet,**
**dass** anhand von Konfigurationsdaten einer am Aufbau der primären Verbindung beteiligten Knoteneinheit zunächst eine Überprüfung erfolgt, ob der Aufbau der sekundären Verbindung (DMC) über diese Knoteneinheit hinweg zulässig ist.

8. Verfahren nach Anspruch 7,
**dadurch gekennzeichnet,**
**dass** die Konfigurationsdaten eine Information enthalten, ob die aktuelle Knoteneinheit eine Domänengrenze ist.

9. Verfahren nach Anspruch 7 oder 8,
**dadurch gekennzeichnet,**
**dass** eine Registrierung als Einstiegs- und/oder Ausstiegsknoten in Abhängigkeit der Konfigurationsdaten erfolgt.

10. Verfahren nach einem der Ansprüche 7 bis 9,
**dadurch gekennzeichnet,**
**dass** für den Fall, dass der Aufbau der sekundären Verbindung (DMC) über diese Knoteneinheit hinweg unzulässig ist, eine dieser Knoteneinheit vorausgehende Knoteneinheit und/oder Kommunikationseinheit als Ausstiegsknoten einer ersten Verbindung (DMC1) der sekundären Verbindung bestimmt wird.

11. Verfahren nach einem der Ansprüche 7 bis 10,
**dadurch gekennzeichnet,**
**dass** für den Fall dass der Aufbau der sekundären Verbindung (DMC) über diese Knoteneinheit unzulässig ist, eine dieser Knoteneinheit folgende Knoteneinheit und/oder Kommunikationseinheit als Einstiegsknoten einer zweiten Verbindung (DMC2) der sekundären Verbindung bestimmt wird.

12. Verfahren nach einem der vorhergehenden Ansprüche,
**dadurch gekennzeichnet,**
**dass** das Kommunikationssystem (CSY) für eine Echtzeitkommunikation vorgesehen ist.

13. Verfahren nach einem der vorhergehenden Ansprüche,
**dadurch gekennzeichnet,**
**dass** die primäre Verbindung parallel zur sekundären Verbindung (DMC) gehalten wird.

14. Verfahren nach einem der vorhergehenden Ansprüche,
**dadurch gekennzeichnet,**
**dass** die Leistungsmerkmalsteuerung der Kommunikationseinheiten (IPPA,IPPD) über Signalisierungsdaten der primären Verbindung durch eine der jeweiligen Kommunikationseinheit (IPPA,IPPD) jeweils zugeordnete Kommunikationseinrichtung (PBXA,PBXD) erfolgt.

15. Programmprodukt mit Programmkode zur Durchführung des Verfahrens nach einem der Ansprüche 1 bis 12 wenn das Programmprodukt auf einem einer Knoteneinheit und/oder Kommunikationseinheit zugeordneten Rechnereinheit abläuft.

## Claims

1. Method for transmitting communication data in a communication system (CSY) between a calling first communication unit (IPPA) and a called second communication unit (IPPD), wherein the communication data includes signalling and/or payload data, said method comprising the following steps:
- setup of a primary connection starting from the first communication unit (IPPA) via at least one node unit to the second communication unit (IPPD) together with transmission of addressing data of the communication units (IPPA,IPPD) and node units involved in the setting up of the primary connection, the primary connection being established on a circuit-oriented or packet-oriented basis on a connection sublink between two node units or communication units in accordance with the type of connection of the node units or communication units, with the primary connection consisting of at least one circuit-oriented sublink and at least one packet-oriented sublink,
- registration of the first communication unit (IPPA) or a first node unit disposed along the primary connection and having a valid addressing data element, as the ingress node,
- registration of the second communication unit (IPPD) or a last node unit disposed along the primary connection and having a valid addressing data element, as the egress node,
- embodiment of a packet-oriented secondary connection (DMC) between the egress and the ingress node via a packet-oriented network that is available in the communication system, with the communication data being transmitted via the secondary connection (DMC).

2. Method according to claim 1,
**characterised in that**
the secondary connection (DMC) is set up starting from the egress node in the opposite direction to the primary connection.

3. Method according to claim 1,
**characterised in that**
the secondary connection (DMC) is set up starting from the ingress node in the direction of the primary connection.

4. Method according to one of the preceding claims,
**characterised in that**
after the setup of the secondary connection (DMC) the latter is maintained in addition to the primary connection and payload data (PLD_S) is exchanged between the ingress and the egress node exclusively via the secondary connection.

5. Method according to claim 1,
**characterised in that**
the secondary connection is established on the basis of the H.323 specification.

6. Method according to claim 1,
**characterised in that**
the secondary connection (DMC) is established on the basis of the SIP specification.

7. Method according to one of the preceding claims,
**characterised in that**
a check is first made on the basis of configuration data of a node unit involved in the setting up of the primary connection in order to determine whether the setup of the secondary connection (DMC) is permitted beyond said node unit.

8. Method according to claim 7,
**characterised in that**
the configuration data includes information as to whether the current node unit is a domain boundary.

9. Method according to claim 7 or 8,
**characterised in that**
a registration as ingress and/or egress node is performed in accordance with the configuration data.

10. Method according to one of claims 7 to 9,
**characterised in that**
in the event that the setup of the secondary connection (DMC) beyond this node unit is not permitted, a node unit and/or communication unit preceding said node unit is determined as the egress node of a first connection (DMC1) of the secondary connection.

11. Method according to one of claims 7 to 10,
**characterised in that**
in the event that the setup of the secondary connection (DMC) via said node unit is not permitted, a node unit and/or communication unit following said node unit is determined as the ingress node of a second connection (DMC2) of the secondary connection.

12. Method according to one of the preceding claims,
**characterised in that**
the communication system (CSY) is provided for real-time communication.

13. Method according to one of the preceding claims,
**characterised in that**
the primary connection is maintained in parallel with the secondary connection (DMC).

14. Method according to one of the preceding claims,
**characterised in that**
the service feature control of the communication units (IPPA,IPPD) is implemented via signalling data of the primary connection by means of a communication device (PBXA,PBXD) assigned in each case to the respective communication unit (IPPA, IPPD).

15. Program product comprising program code for performing the method according to one of claims 1 to 12 if the program product executes on a computer unit assigned to a node unit and/or communication unit.

## Revendications

1. Procédé pour la transmission de données de communication dans un système de communication (CSY) entre une première unité de communication (IPPA) appelant et une seconde unité de communication (IPPD) appelée, les données de communication comprenant des données de signalisation et/ou des données utiles, comprenant les étapes suivantes :
- établissement d'une communication primaire à partir de la première unité de communication (IPPA) au moyen d'au moins une unité nodale avec la seconde unité de communication (IPPD) avec transmission de données d'adressage des unités de communication (IPPA, IPPD) et unités nodales impliquées dans l'établissement de la communication primaire, la communication primaire s'effectuant sur un tronçon de communication entre deux unités nodales resp. unités de communication en fonction du type de raccordement des unités nodales resp. unités de communication avec une orientation ligne ou une orientation paquet, la communication primaire comprenant au moins un tronçon orienté ligne et au moins un tronçon orienté paquet,
- enregistrement de la première unité de communication (IPPA) ou d'une première unité nodale disposée le long de la communication primaire, qui présente une donnée d'adressage valable, comme noeud d'entrée ;
- enregistrement de la seconde unité de communication (IPPD) ou d'une dernière unité nodale disposée le long de la communication primaire, qui présente une donnée d'adressage valable, comme noeud de sortie ;
- réalisation d'une communication (DMC) secondaire orientée paquet entre le noeud de sortie et le noeud d'entrée par un réseau orienté paquet disponible dans le système de communication, les données de communication étant transmises par la communication (DMC) secondaire.

2. Procédé selon la revendication 1,
**caractérisé en ce que**
l'établissement de la communication (DMC) secondaire s'effectue à partir du noeud de sorite dans le sens contraire à la communication primaire.

3. Procédé selon la revendication 1,
**caractérisé en ce que**
l'établissement de la communication (DMC) secondaire s'effectue à partir du noeud d'entrée en direction de la communication primaire.

4. Procédé selon l'une quelconque des revendications précédentes,
**caractérisé en ce que**,
après l'établissement de la communication (DMC) secondaire, celle-ci est maintenue en supplément de la communication primaire et des données utiles (PLD_S) sont échangées entre le noeud d'entrée et le noeud de sortie exclusivement par la communication secondaire.

5. Procédé selon la revendication 1,
**caractérisé en ce que**
la communication secondaire s'effectue sur la base de la spécification H.323.

6. Procédé selon la revendication 1,
**caractérisé en ce que**
la liaison (DMC) secondaire s'effectue sur la base de la spécification SIP.

7. Procédé selon l'une quelconque des revendications précédentes,
**caractérisé en ce que**,
à l'aide de données de configuration d'une unité nodale impliquée dans l'établissement de la communication primaire, on vérifie d'abord si l'établissement de la communication (DMC) secondaire par cette unité nodale est admissible.

8. Procédé selon la revendication 7,
**caractérisé en ce que**
les données de configuration contiennent une information mentionnant si l'unité nodale actuelle est une limite de domaine.

9. Procédé selon la revendication 7 ou 8,
**caractérisé en ce que**
un enregistrement sous forme de noeud d'entrée et/ou de sortie s'effectue en fonction des données de configuration.

10. Procédé selon l'une quelconque des revendications 7 à 9,
**caractérisé en ce que**,
dans le cas où l'établissement de la communication (DMC) secondaire par cette unité nodale est inadmissible, une unité nodale et/ou une unité de communication précédant cette unité nodale est déterminée comme noeud de sortie d'une première communication (DMC1) de la communication secondaire.

11. Procédé selon l'une quelconque des revendications 7 à 10,
**caractérisé en ce que**
dans le cas où l'établissement de la communication (DMC) secondaire par cette unité nodale est inadmissible, une unité nodale et/ou une unité de communication qui suit cette unité nodale est définie comme noeud d'entrée d'une seconde liaison (DMC) de la communication secondaire.

12. Procédé selon l'une quelconque des revendications précédentes,
**caractérisé en ce que**
le système de communication (CSY) est prévu pour une communication en temps réel.

13. Procédé selon l'une quelconque des revendications précédentes,
**caractérisé en ce que**
la communication primaire est maintenue parallèlement à la communication (DMC) secondaire.

14. Procédé selon l'une quelconque des revendications précédentes,
**caractérisé en ce que**
la commande des possibilités offertes aux abonnés des unités de communication (IPPA, IPPD) s'effectue au moyen de données de signalisation de la communication primaire par un dispositif de communication (PBXA, PBXD) attribué respectivement à l'unité de communication (IPPA, IPPD) concernée.

15. Produit de programme avec code de programme pour la mise en oeuvre du procédé selon l'une quelconque des revendications 1 à 12 lorsque le produit de programme se déroule sur une unité d'ordinateur attribuée à une unité nodale et/ou unité de communication.
